# EUROPÄISCHE PATENTANMELDUNG

(11) **EP 4 447 239 A1**
(43) Veröffentlichungstag der Anmeldung: **16.10.2024**
(21) Anmeldenummer: 23168091.9
(22) Anmeldetag: 14.04.2023
(51) Int. Cl.: H02B 1/056, H01R 4/48, H01R 9/26, H02B 1/21, H01R 13/627, H01R 25/14, H02G 5/08

(54) **VORRICHTUNG ZUR VER- UND ENTRASTUNG EINES ELEKTRISCHEN FUNKTIONSMODULS SOWIE VERFAHREN ZUM ENTRASTEN EINES ELEKTRISCHEN FUNKTIONSMODULS**

(71) Anmelder: Wöhner Besitz GmbH, 96472 Rödental (DE)
(72) Erfinder: Parys, Fabian, 96450 Coburg (DE)
(74) Vertreter: Bratovic, Nino Maria

(57) **Zusammenfassung**

Die Erfindung stellt eine Vorrichtung (100) zur Ver- und Entrastung eines elektrischen Funktionsmoduls (190) sowie ein Verfahren zum Entrasten eines solchen Funktionsmoduls (190) bereit. Die Vorrichtung (100) weist dabei auf:
eine erste Rasteinrichtung (110) und eine zweite Rasteinrichtung (120), wobei jede Rasteinrichtung (110, 120) mindestens einen Rastzahn (111-i, 121-i) aufweist, der zum Verrasten des elektrischen Funktionsmoduls (190) in die mindestens eine Halteöffnung (5) einführbar ist;
wobei der mindestens eine Rastzahn (111-i) der ersten Rasteinrichtung (110) und der mindestens eine Rastzahn (121-i) der zweiten Rasteinrichtung (120) voneinander abgewandt sind und zum Verrasten des elektrischen Funktionsmoduls (190) voneinander wegbewegbar (W1) und zum Entrasten des elektrischen Funktionsmoduls (190) aufeinander zu bewegbar (Z1) sind;
ein erstes Schlittenelement (130), welches entlang einer ersten Bewegungsachse (A1) linear bewegbar ist;
ein zweites Schlittenelement (140), welches entlang einer zweiten Bewegungsachse (A2) linear bewegbar ist;
eine erste Umsetzeinrichtung (151), welche eine lineare Bewegung des ersten Schlittenelements entlang der ersten Bewegungsachse (A1) in eine lineare Bewegung des zweiten Schlittenelements entlang der zweiten, zur ersten senkrechten, Bewegungsachse (A2) umsetzt; und
eine zweite Umsetzeinrichtung (152), welche die lineare Bewegung des zweiten Schlittenelements (140) in eine Bewegung der Rastzähne (111-i, 121-i), welche zu verschiedenen Rasteinrichtungen (110, 120) gehören, aufeinander zu (Z1) oder voneinander weg (W1) umzusetzen.

## Beschreibung

Die Erfindung betrifft eine Vorrichtung zur Ver- und Entrastung eines elektrischen Funktionsmoduls an einem Stromsammelschienenmodul sowie ein Verfahren zum Entrasten und/oder Verrasten eines elektrischen Funktionsmoduls von einem Stromsammelschienenmodul.

Stromsammelschienenmodule können eine oder mehrere Stromsammelschienen zur Stromversorgung von elektrischen Geräten umfassen. Die Geräte können dabei unterteilt werden in ein elektrisches Funktionsmodul, welches die eigentliche Aufgabe des Geräts wahrnimmt, und eine Vorrichtung zum Ver- und Entrasten des Funktionsmoduls an dem Stromsammelschienenmodul.

Es existiert bereits eine Vielzahl von Ver- und Entrastungssystemen, sowie eine Vielzahl von verschiedenen Stromsammelschienenmodulen. Ein zentraler Punkt dabei ist immer die Sicherheit der Benutzer. Insbesondere soll ein verrastetes Gerät zwar verhältnismäßig einfach lösbar sein, sich aber nicht von selbst lösen können. Darüber hinaus ist es vorteilhaft, wenn der Lösevorgang nur durch Benutzung eines Werkzeuges geschieht und im Gegensatz dazu das Verrasten (oder: Aufrasten) ohne Werkzeug erfolgt. Es ist außerdem bevorzugt, wenn ein Ver- und Entrastungssystem vielfältig anwendbar ist.

Es ist daher eine Aufgabe der vorliegenden Erfindung, eine Vorrichtung zum Verrasten von elektrischen Funktionsmodulen an Stromsammelschienenmodulen zu schaffen, welche leicht verrastbar ist, zuverlässig verrastet bleibt und leicht entrastbar ist, wobei das Entrasten vorzugsweise nur mithilfe eines Werkzeugs möglich sein soll. Außerdem soll ein Verfahren geschaffen werden, mittels welchem eine Vorrichtung leicht von einem Stromsammelschienenmodul entrastet werden kann.

Diese Aufgaben werden erfindungsgemäß durch die Gegenstände der unabhängigen Patentansprüche gelöst.

Die Erfindung schafft demnach eine Vorrichtung zur Ver- und Entrastung eines elektrischen Funktionsmoduls an mindestens einer Halteöffnung eines Stromsammelschienenmoduls, aufweisend:
eine erste Rasteinrichtung und eine zweite Rasteinrichtung,
wobei jede Rasteinrichtung mindestens einen Rastzahn aufweist, der zum Verrasten des elektrischen Funktionsmoduls in die mindestens eine Halteöffnung einführbar ist;
wobei der mindestens eine Rastzahn der ersten Rasteinrichtung und der mindestens eine Rastzahn der zweiten Rasteinrichtung voneinander abgewandt sind und zum Verrasten des elektrischen Funktionsmoduls zum Hintergreifen der mindestens einen Halteöffnung voneinander wegbewegbar und zum Entrasten des elektrischen Funktionsmoduls aufeinander zu bewegbar sind;
ein erstes Schlittenelement welches entlang einer ersten Bewegungsachse linear bewegbar ist;
ein zweites Schlittenelement, welches entlang einer zweiten Bewegungsachse linear bewegbar ist, welche senkrecht zu der ersten Bewegungsachse angeordnet ist;
eine erste mechanische Umsetzeinrichtung, welche dazu eingerichtet ist, eine lineare Bewegung des ersten Schlittenelements entlang der ersten Bewegungsachse in eine lineare Bewegung des zweiten Schlittenelements entlang der zweiten Bewegungsachse umzusetzen; und
eine zweite mechanische Umsetzeinrichtung, welche dazu eingerichtet ist, die lineare Bewegung des zweiten Schlittenelements entlang der zweiten Bewegungsachse in eine Bewegung der Rastzähne, welche zu verschiedenen Rasteinrichtungen gehören, aufeinander zu oder voneinander weg umzusetzen.

Die genannten Elemente und Einrichtungen können bevorzugt jeweils einstückig ausgebildet sein, wobei nicht-leitfähige Elemente und Einrichtungen beispielsweise aus einem Kunststoff ausgebildet sein können.

Die Vorrichtung umfasst bevorzugt ein Gehäuse, und das zu verrastende elektrische Funktionsmodul kann besonders bevorzugt innerhalb des Gehäuses angeordnet sein. Es kann dort mechanisch befestigt sein und/oder elektrisch mit Anschlusskontakten der Vorrichtung verbunden sein. Eine erfindungsgemäße Vorrichtung, welche das elektrische Funktionsmodul umfasst, wird hierin auch als "elektrisches Gerät" bezeichnet.

Obgleich hierin häufig das Funktionsmodul und die Vorrichtung zur Verrastung des Funktionsmoduls als separat beschrieben werden, versteht es sich, dass diese in vielen Ausführungsformen auch als miteinander fest verbunden ausgebildet werden können und die Unterteilung daher nur funktional ist bzw. der einfacheren Erklärung dient.

Unter einer Verrastung ist insbesondere zu verstehen, dass die Vorrichtung im verrasteten Zustand (d.h. die verrastete Vorrichtung) nicht ohne das Betätigen eines Mechanismus und/oder die Zuhilfenahme eines Werkzeugs von dem Stromsammelschienenmodul lösbar ist. In dem entrasteten Modus ist, im Gegensatz dazu, das einfache Lösen von dem Stromsammelschienenmodul möglich, insbesondere indem die Vorrichtung einfach direkt von dem Stromsammelschienenmodul abgezogen wird. Das Verrasten an dem Stromsammelschienenmodul kann auch als Verriegeln an dem Stromsammelschienenmodul bezeichnet werden, und das Entrasten als Entriegeln.

Ein wesentlicher Vorteil der erfindungsgemäßen Ideen ist es, dass eine simple mechanische Betätigung des ersten Schlittenelements, beispielsweise mit Hilfe eines Werkzeugs, mit einer einzelnen einfachen Bewegung entlang einer Bewegungsachse, rein mechanisch in eine ver- bzw. entrastende Bewegung von Rastzähnen umgewandelt wird. Ein Gehäuse der Vorrichtung kann so beschaffen sein, dass zum Betätigen des ersten Schlittenelements ein typisches Werkzeug - wie etwa ein Schraubendreher - als Hebel angewandt werden kann, um das Betätigen besonders einfach zu gestalten.

Gemäß einigen bevorzugten Ausführungsformen, Varianten oder Verfeinerungen von Ausführungsformen beinhaltet die erste mechanische Umsetzeinrichtung einen ersten Schrägabschnitt an dem ersten Schlittenelement (oder: des ersten Schlittenelements) mit einer ersten vordefinierten Neigung gegenüber der ersten Bewegungsachse, sowie einen zweiten Schrägabschnitt an dem zweiten Schlittenelement (oder: des zweiten Schlittenelements) mit der ersten vordefinierten Neigung gegenüber der ersten Bewegungsachse. Der zweite Schrägabschnitt kann an dem ersten Schrägabschnitt bevorzugt derart anliegen oder angelegt sein, dass eine lineare Bewegung des ersten Schlittenelements entlang der ersten Bewegungsachse eine lineare Bewegung des zweiten Schlittenelements entlang der zweiten Bewegungsachse bewirkt, insbesondere mechanisch-automatisch. Somit ergibt sich eine einfache und platzsparende, dabei aber sehr effektive Umsetzung von Kräften.

Gemäß einigen bevorzugten Ausführungsformen, Varianten oder Verfeinerungen von Ausführungsformen sind die Rasteinrichtungen und die zweite mechanische Umsetzeinrichtung derart ausgebildet, dass die Rastzähne auf einer gekrümmten Bahn aufeinander zu beziehungsweise voneinander wegbewegt werden bzw. auf gekrümmten Bahnen bezüglich einander bewegbar sind. Mit anderen Worten können die Rasteinrichtungen insbesondere gedreht werden, beispielsweise jeweils um Winkel zwischen 10° und 90°. Hierdurch kann die Vorrichtung platzsparender ausgebildet werden. Dieser Mechanismus ist auch als "rotatorische Lösung" bezeichenbar.

Gemäß einigen bevorzugten Ausführungsformen, Varianten oder Verfeinerungen von Ausführungsformen sind die Rasteinrichtungen jeweils einzeln um eine gemeinsame Rotationsachse rotierbar angeordnet, welche bevorzugt innerhalb sowohl der ersten als auch der zweiten Rasteinrichtung verläuft. Die zweite mechanische Umsetzeinrichtung kann dazu eingerichtet sein, die lineare Bewegung des zweiten Schlittenelements in jeweilige Drehbewegungen der Rasteinrichtungen aufeinander zu beziehungsweise voneinander weg umzusetzen. Hierdurch kann die Vorrichtung noch platzsparender ausgebildet werden.

Gemäß einigen bevorzugten Ausführungsformen, Varianten oder Verfeinerungen von Ausführungsformen beinhaltet die zweite mechanische Umsetzeinrichtung mindestens einen Stempelabschnitt an dem zweiten Schlittenelement sowie mindestens einen Schulterabschnitt an mindestens einer Rasteinrichtung. Jeder Stempelabschnitt kann so angeordnet und ausgebildet sein, dass er, bei einer Bewegung des zweiten Schlittenelements entlang der zweiten Bewegungsachse, in einer von dem ersten Schlittenelement abgewandten Richtung an einem jeweiligen Schulterabschnitt ein Drehmoment auf diejenige Rasteinrichtung ausübt, welche den Schulterabschnitt beinhaltet. Die zweite Umsetzeinrichtung kann dabei symmetrisch bezüglich der beiden Rasteinrichtungen ausgebildet sein, sodass beide mit demselben Drehmoment beaufschlagt und somit gleichzeitig und gleich weit gedreht werden.

Gemäß einigen bevorzugten Ausführungsformen, Varianten oder Verfeinerungen von Ausführungsformen sind die Rasteinrichtungen und die zweite mechanische Umsetzeinrichtung derart ausgebildet, dass die Rastzähne in einer linearen Bewegung aufeinander zu sowie voneinander weg bewegbar sind. Dieser Mechanismus ist als "lineare Lösung" bezeichenbar.

Gemäß einigen bevorzugten Ausführungsformen, Varianten oder Verfeinerungen von Ausführungsformen beinhaltet die zweite mechanische Umsetzeinrichtung mindestens einen dritten Schrägabschnitt an dem zweiten Schlittenelement (oder: des zweiten Schlittenelements) mit einer zweiten vordefinierten Neigung gegenüber der zweiten Bewegungsachse sowie mindestens einen vierten Schrägabschnitt an mindestens einer Rasteinrichtung (oder: mindestens einer Rasteinrichtung) mit der zweiten vordefinierten Neigung gegenüber der zweiten Bewegungsachse. Jeder dritte Schrägabschnitt kann bevorzugt an einem jeweiligen vierten Schrägabschnitt derart anliegen, dass eine lineare Bewegung des zweiten Schlittenelements entlang der zweiten Bewegungsachse in einer von dem ersten Schlittenelement abgewandten Richtung in eine Bewegung der Rasteinrichtung, welche den jeweiligen vierten Schrägabschnitt aufweist, entlang der ersten Bewegungsachse umgesetzt wird. Die linearen Bewegungen der Rasteinrichtungen können dabei insbesondere symmetrisch bezüglich einer zwischen den Rasteinrichtungen angeordneten Symmetrieebene erfolgen.

Gemäß einigen bevorzugten Ausführungsformen, Varianten oder Verfeinerungen von Ausführungsformen umfasst die Vorrichtung zusätzlich ein Vorspannungselement, insbesondere ein Federelement, welches dazu angeordnet und eingerichtet ist, auf die Rasteinrichtungen eine wechselseitige Vorspannung auszuüben, welche die Bewegung der Rastzähne voneinander weg begünstigt. Somit muss zum Entrasten die durch das Vorspannungselement ausgeübte Kraft zunächst überwunden werden, was die Verrastung sicherer macht.

Gemäß einigen bevorzugten Ausführungsformen, Varianten oder Verfeinerungen von Ausführungsformen weist jede Rasteinrichtung eine Federaufnahme auf. Die Federaufnahmen sind dazu ausgebildet, das als Federelement ausgebildete Vorspannungselement zumindest teilweise aufzunehmen und zu fixieren. Ist das Vorspannungselement nicht als Federelement ausgebildet, kann die Federaufnahme auch als Vorspannungselement-Aufnahme bezeichnet werden. Das Federelement kann auch alternativ an die Rasteinrichtung in geeigneter Weise integriert sein. Beispielsweise kann ein angespritzter und damit integraler, elastischer Geometriebereich an einer oder mehreren Rasteinrichtung(en) vorgesehen sein, der als Vorspannungselement, insbesondere Federelement, fungiert.

Gemäß einigen bevorzugten Ausführungsformen, Varianten oder Verfeinerungen von Ausführungsformen ist einerseits des ersten und zweiten Schlittenelements ein Funktionsanschluss für die elektrische (oder: galvanische) Kontaktierung und/oder mechanische Arretierung (oder: Befestigung) des Funktionsmoduls und andererseits des ersten und zweiten Schlittenelements mindestens ein Anschlusskontakt ausgebildet, welcher dazu ausgebildet und angeordnet ist, in elektrischem Kontakt mit einer Stromsammelschiene des Stromsammelschienenmoduls zu stehen, wenn die Vorrichtung an dem Stromsammelschienenmodul verrastet ist. Funktionsanschluss und Anschlusskontakte können einstückig aus einem elektrisch leitenden Material, insbesondere Kupfer oder einer Kupferlegierung, gefertigt sein, oder auch mehrteilig ausgeführt und miteinander verbunden sein.

Gemäß einigen bevorzugten Ausführungsformen, Varianten oder Verfeinerungen von Ausführungsformen ist der mindestens eine Anschlusskontakt im Wesentlichen flach ausgebildet und parallel zu den Rastzähnen angeordnet, welche bevorzugt ebenfalls flach ausgebildet sind.

Gemäß einigen bevorzugten Ausführungsformen, Varianten oder Verfeinerungen von Ausführungsformen sind der mindestens eine Anschlusskontakt und die Rastzähne derart angeordnet und ausgebildet, dass sie gleichzeitig in verschiedene Halteschlitze einer Reihe von parallel angeordneten stromführenden Halteschlitzen als Halteöffnungen des Stromsammelschienenmoduls einführbar sind. Somit ergibt sich eine große Vielfalt der Anschlussmöglichkeiten der Vorrichtung (bzw. des elektrischen Geräts) an Positionen entlang des Stromsammelschienenmoduls.

Gemäß einigen bevorzugten Ausführungsformen, Varianten oder Verfeinerungen von Ausführungsformen umfasst die Vorrichtung ein an dem Funktionsanschluss elektrisch verbundenes und/oder mechanisch arretiertes (oder: befestigtes) Funktionsmodul, oder zumindest einen Funktionsanschluss, an dem das Funktionsmodul elektrisch verbindbar und/oder mechanisch arretierbar oder befestigbar ist. Wie bereits erwähnt, kann die Vorrichtung, welche das Funktionsmodul umfasst, auch als elektrisches Gerät bezeichnet werden.

Gemäß einigen bevorzugten Ausführungsformen, Varianten oder Verfeinerungen von Ausführungsformen ist das Funktionsmodul als ein Stromeinspeisemodul und/oder als eine elektrische Komponente und/oder als eine elektronische Komponente ausgebildet. Ein solches Stromeinspeisemodul kann beispielsweise mit einer Rahmenklemme, mit einer Prismen- oder Schellenklemme, mit einer Federzugklemme, mit einem Klemmbolzen oder mit mehreren Klemmbolzen, und/oder mit einem Stehbolzen ausgebildet sein, wobei diese Aufzählung nicht abschließend ist. Bei der elektrischen Komponente kann es sich beispielsweise um einen Sicherungshalter, einen Schalter, einen Last-Trennschalter, einen Lasttrennschalter mit Sicherungen oder um einen Sicherungslasttrennschalter handeln, wobei auch diese Aufzählung nicht abschließend ist. Bei der elektronischen Komponenten kann es sich beispielsweise um ein Netzteil, um ein Überspannungsschutzgerät, oder um einen Motorstarter handeln, wobei auch diese Aufzählung nicht abschließend ist.

Die Vorrichtung oder das Gerät können ein- oder mehrpolig ausgebildet sein und beispielsweise zur ein- oder mehrpoligen Einspeisung in das Stromsammelschienenmodul dienen.

Die Erfindung stellt außerdem ein System bereit, welches ein Sammelschienenmodul sowie eine erfindungsgemäße Vorrichtung (oder ein erfindungsgemäßes elektrisches Gerät) umfasst.

Die Erfindung stellt außerdem ein Verfahren zum Entrasten eines elektrischen Funktionsmoduls von mindestens einer Halteöffnung eines Stromsammelschienenmoduls bereit, wobei das Verfahren zumindest die Schritte aufweist:
Bewegen eines ersten Schlittenelements einer Vorrichtung, welche durch das beidseitige Hintergreifen einer Halteöffnung eines Stromsammelschienenmoduls durch mindestens zwei voneinander abgewandte Rastzähne an dem Stromsammelschienenmodul verrastet ist und welche einen Funktionsanschluss aufweist, an welchem das elektrische Funktionsmodul befestigt ist, in einer linearen Bewegung entlang einer ersten Bewegungsachse, welche senkrecht zu einem longitudinalen Verlauf des Stromsammelschienenmoduls angeordnet ist;
Bewegen, als mechanisch-automatische Reaktion auf das Bewegen des ersten Schlittenelements, eines zweiten Schlittenelements entlang einer zweiten Bewegungsachse, welche senkrecht auf der ersten Bewegungsachse steht; und
Bewegen, als mechanisch-automatische Reaktion auf das Bewegen des zweiten Schlittenelements, von voneinander abgewandten Rastzähne aufeinander zu bewegen, sodass die Rastzähne die Halteöffnung nicht mehr beidseitig hintergreifen, wodurch die Vorrichtung von dem Stromsammelschienenmodul entrastet ist.

Weitere vorteilhafte Optionen, Modifikationen, Variationen und Verfeinerungen ergeben sich aus dem Folgenden aus der Beschreibung der beigefügten Figuren.

### Kurze Beschreibung der Figuren

Die Erfindung wird nachstehend anhand von Ausführungsbeispielen in den Figuren der Zeichnungen näher erläutert. Es zeigen hierbei:
- Fig. 1: eine schematische Explosionsdarstellung von Teilen einer Vorrichtung gemäß einer Ausführungsform der vorliegenden Erfindung;
- Fig. 2: eine schematische Schrägansicht der Vorrichtung aus Fig. 1 in zusammengesetztem Zustand;
- Fig. 3: eine schematische Schrägansicht der Vorrichtung aus Fig. 1, während sie mit einem Stromsammelschienenmodul verrastet ist;
- Fig. 4: eine schematische Schrägansicht eines beispielhaften Stromsammelschienenmoduls mit fünf Stromsammelschienen, an welchen sechs erfindungsgemäße Vorrichtungen verrastet sind, und somit auch eines Systems gemäß einer weiteren Ausführungsform der vorliegenden Erfindung;
- Fig. 5 bis Fig. 10: schematische Schrägansichten einzelner Teile der Vorrichtung aus Fig. 1 zu deren näheren Erläuterung;
- Fig. 11: eine schematische Explosionsdarstellung von Teilen einer Vorrichtung gemäß einer weiteren Ausführungsform der vorliegenden Erfindung;
- Fig. 12: eine schematische Schrägansicht der Vorrichtung aus Fig. 11 in einem zusammengesetztem Zustand;
- Fig. 13 bis Fig. 18: schematische Schrägansichten einzelner Teile der Vorrichtung aus Fig. 11 zu deren näheren Erläuterung;
- Fig. 19: schematische Ansichten verschiedener möglicher Ausgestaltungen von Anschlusskontakten für die erfindungsgemäßen Vorrichtungen;
- Fig. 20: eine Darstellung der Anschlusskontakte aus Fig. 18, wie sie eine Stromsammelschiene elektrisch kontaktieren; und
- Fig. 21: ein schematisches Flussdiagramm zum Erläutern eines Verfahrens gemäß noch einer weiteren Ausführungsform der vorliegenden Erfindung.

In sämtlichen Figuren sind gleiche bzw. funktionsgleiche Elemente und Vorrichtungen - sofern nicht anders angegeben ist - mit denselben Bezugszeichen versehen worden. Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

### Detaillierte Beschreibung der Figuren

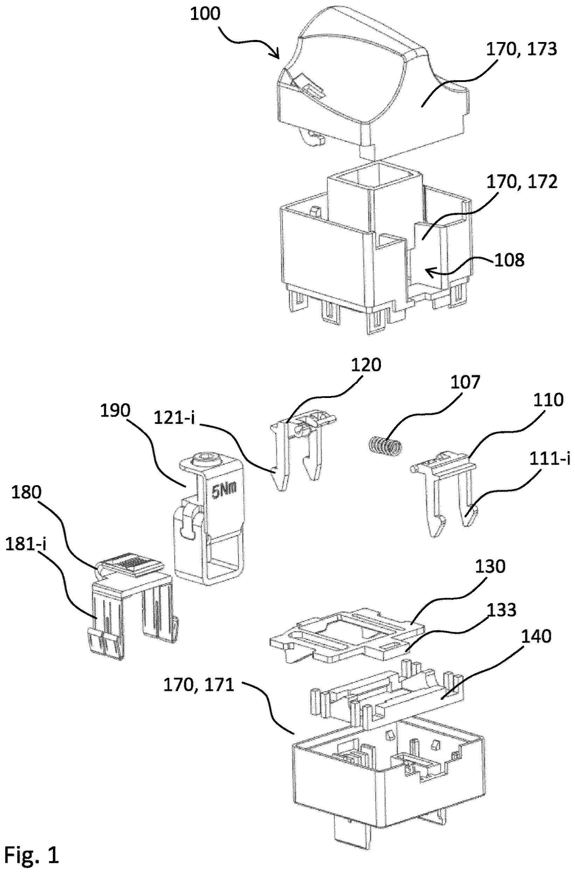

Fig. 1 zeigt eine schematische Explosionsdarstellung von Teilen einer Vorrichtung 100 gemäß einer Ausführungsform der vorliegenden Erfindung, d.h. einer Vorrichtung zur Ver- und Entrastung eines - insbesondere elektrischen - Funktionsmoduls 190 an mindestens einer Halteöffnung eines Stromsammelschienenmoduls.

Die Vorrichtung 100 kann die in Fig. 1 gezeigten Bestandteile aufweisen oder aus diesen bestehen. Insbesondere kann die Vorrichtung 100 das Funktionsmodul 190 (hier: eine Rahmenklemme) beinhalten.

Anhand von Fig. 1 werden zunächst übersichtsartig einige Bestandteile der Vorrichtung 100 beschrieben, bevor anhand der nachfolgenden Figuren die Details der Erfindung sowie mögliche Optionen, Modifikationen und Verfeinerungen näher erläutert werden.

Gemäß Fig. 1 umfasst die Vorrichtung 100 ein Gehäuse 170, welches hier beispielhaft aus drei Teilen besteht: einer Unterschale 171, welches dazu ausgelegt ist, mit dem Stromsammelschienenmodul in Berührung zu kommen, eine Oberschale 173, sowie ein dazwischen angeordnetes Mittelstück 172. In dem Mittelstück 172 ist eine Einführöffnung 108 ausgebildet, durch welche beispielsweise eine stromführende Leitung eingeführt und an dem Funktionsmodul 190 befestigt werden kann, etwa zur Einspeisung eines elektrischen Stroms auf eine Stromsammelschiene des Stromsammelschienenmoduls.

Zur Verrastung der Vorrichtung 100 an der mindestens einen Halteöffnung sind zwei Rasteinrichtungen 110, 120 vorgesehen. Jede der Rasteinrichtung 110, 120 weist hierbei zwei längliche, flach ausgebildete und parallel angeordnete Rastelemente auf, von denen jedes in einem Rastzahn 111-i, 121-i endet. Die Rastzähne 111-i, 121-i dienen zum Hintergreifen der Halteöffnung, während die Vorrichtung 100 an dem Stromsammelschienenmodul verrastet ist, wie im Folgenden noch näher erläutert werden wird.

Ein Vorspannungselement 107, hier beispielsweise als Schraubenfeder ausgebildet, dient dazu, die Rasteinrichtung 110, 120 mit einer verrastenden Vorspannung zu beaufschlagen.

Die Vorrichtung 100 umfasst weiterhin ein erstes Schlittenelement 130 sowie ein zweites Schlittenelement 140, die in der Unterschale 171 angeordnet sind. Erwähnenswert ist an dieser Stelle bereits ein an dem ersten Schlittenelement 130 angeordnetes erstes Betätigungselement 133, mittels welchem die Vorrichtung 100 im verrasteten Zustand wieder entrastet werden kann.

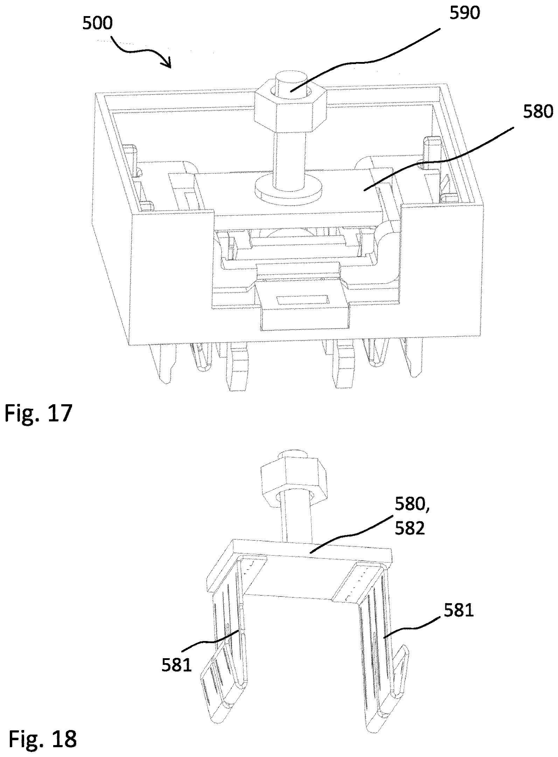

Ein Funktionsanschluss 180 dient zum elektrischen, und hier auch mechanischen, Verbinden des Funktionsmoduls 190 mit Anschlusskontakten 181-i, welche, wenn die Vorrichtung 100 mit dem Stromsammelschienenmodul verrastet ist, elektrisch mit dessen Stromsammelschiene in Kontakt stehen. Somit besteht ein elektrischer Pfad zwischen Stromsammelschiene, Anschlusskontakten, Funktionsanschluss 180, Funktionsmodul 190 und ggfs. auch einem durch die Einführöffnung 108 in das Funktionsmodul 190 eingeführten Kabel. Vorliegend sind der Funktionsanschluss 180 und die Anschlusskontakte 181-i mehrteilig gefertigt, wobei die (bevorzugt einteilig ausgeführten) Anschlusskontakte 181-i an einem (bevorzugt einteilig ausgeführten) Funktionsanschluss 180 angebracht, bevorzugt angeschweißt, sind (siehe hierzu auch Fig. 18 und die zugehörige Beschreibung). Die Anschlusskontakte 181-i und der Funktionsanschluss 180 können alternativ auch einteilig ausgeführt sein. Vorzugsweise sind die Anschlusskontakte 181-i mit einer Blattfederfunktion ausgebildet, sodass die Anschlusskontakte 181-i, in einen stromführenden Schlitz eingeführt, beidseitig an diesen andrücken.

Es versteht sich, dass die Einführöffnung 108 auch dazu ausgelegt sein kann, einen Adapter oder ein weiteres elektrisches Funktionsmodul oder elektrisches Geräte zu empfangen, beispielsweise ein Messgerät, eine Kommunikationseinrichtung, eine Anzeige, eine Benutzerschnittstelle und/oder dergleichen mehr.

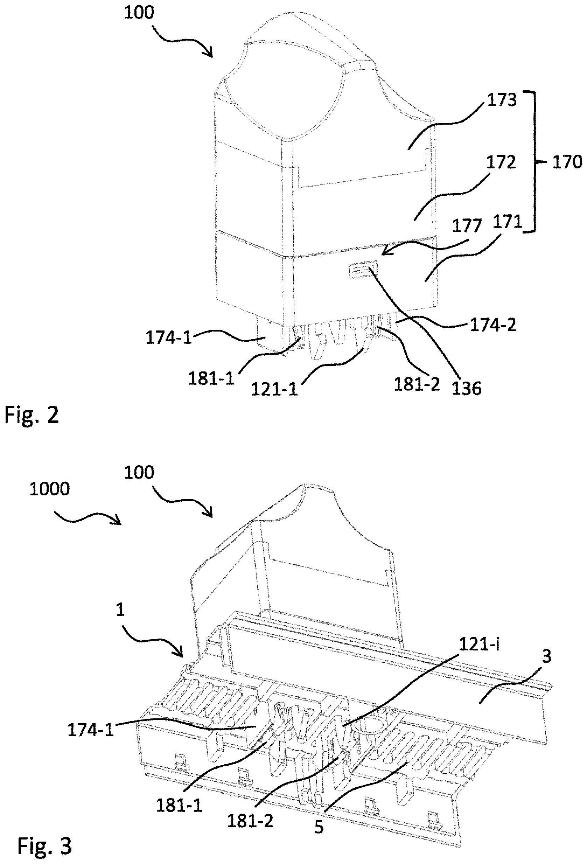

Fig. 2 zeigt die Vorrichtung 100 in zusammengesetztem Zustand, aus einer von der Einführöffnung 108 abgewandten Seite. An einer rückseitigen (bezogen auf die Einführöffnung 108) Öffnung 177 in der Unterschale 171 ist ein zweites Betätigungselement 136 des ersten Schlittenelements 130 sichtbar.

Ohne Beschränkung der Allgemeinheit wird im Folgenden diejenige Seite der Vorrichtung 100, an der sich die Einführöffnung 108 befindet, als "Vorderseite" bezeichnet werden, und die von dieser abgewandten Seite als "Rückseite". Entsprechend werden Bezeichnungen wie "vorderseitig" oder "rückseitig" verwendet werden. Begriffe wie "oben" und "unten" (etwa bei Oberschale 173 und Unterschale 171) bzw. "über" oder "unter" beziehen sich auf Abstände von dem Stromsammelschienenmodul 1, welches als "unten" angeordnet definiert wird. Es versteht sich jedoch, dass die Vorrichtung 100 auch in beliebigen anderen Ausrichtungen angeordnet werden kann. Tatsächlich werden im Realfall die Stromsammelschienenmodule 1 üblicherweise an einer Wand befestigt werden, können aber danke der erfindungsgemäßen Verrastung auch über Kopf angeordnet werden.

Gut erkennbar sind auch seitliche Schutzwände 174-1, 174-2, welche ein (vorzugsweise integraler) Teil der Unterschale 171 sind und die Anschlusskontakte 181-i und die Rastelemente insbesondere vor Verbiegen oder Abbrechen bei Abnehmen des Vorrichtung 100 von dem Stromsammelschienenmodul schützen.

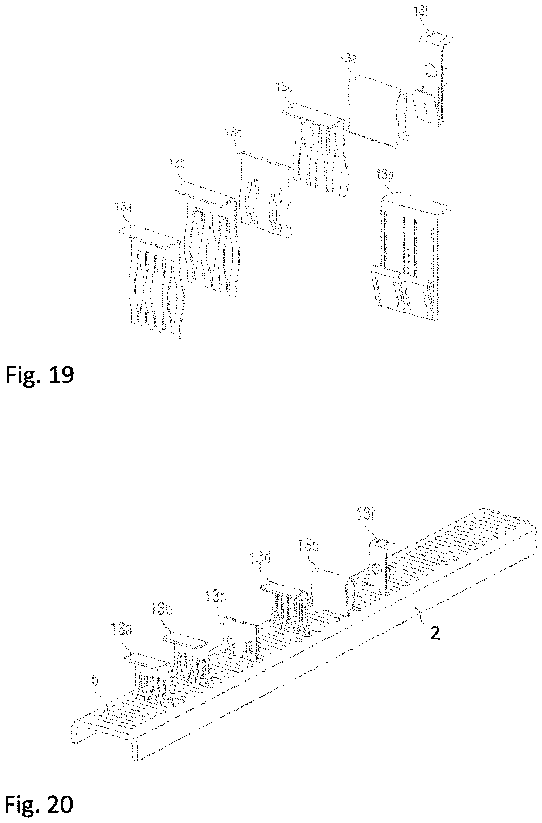

Fig. 3 zeigt die Vorrichtung 100, wie sie an einem Stromsammelschienenmodul 1 verrastet ist. Das Stromsammelschienenmodul 1 umfasst eine geschlitzte Berührungsschutzschiene 3 sowie eine von dieser dreiseitig umfasste geschlitzte Stromsammelschiene, wobei die Schlitze von Berührungsschutzschiene 3 und Stromsammelschiene miteinander fluchten. Eine solche Stromsammelschiene 2 ist beispielsweise in Fig. 20 dargestellt, wobei die vorliegende Erfindung nicht auf die Verwendung mit geschlitzten Stromsammelschienen 2 begrenzt ist.

Demnach zeigt Fig. 3 auch ein erfindungsgemäßes System 1000 aus der Vorrichtung 100 (mit oder ohne Funktionsmodul 190) und einem Stromsammelschienenmodul 1. Bei der gezeigten Ausführungsform sind mehrere Halteöffnungen 5 des Stromsammelschienenmoduls 1 vorgesehen, welches als eine Vielzahl von zueinander parallelen Halteschlitzen in der Stromsammelschiene 2 ausgebildet sind. Vorteilhaft dienen hier die Halteschlitze in der Stromsammelschiene 2 nicht nur als Halteöffnungen 5, sondern auch als elektrische Aufnahmen für die Anschlusskontakte 181-i.

In anderen Varianten können aber elektrische Aufnahmen einerseits und Halteöffnungen andererseits auch separat voneinander ausgebildet sein. Beispielsweise könnte das Stromsammelschienenmodul 1 mit größerem Abstand zwischen der Berührungsschutzschiene 3 und der Stromsammelschiene 2 ausgebildet sein. Die Halteöffnungen 5 könnten durch die Schlitze in der Berührungsschutzschiene 3 gebildet, und die elektrischen Aufnahmen weiterhin durch die Schlitze in der Stromsammelschiene 2 gebildet werden.

Das in Fig. 3 gezeigte System 1000, bzw. die gezeigte Konfiguration der Vorrichtung 100, hat hier den speziellen Vorteil, dass die Vorrichtung 100 an beliebiger Stelle entlang des Stromsammelschienenmoduls 1 eingesteckt und verrastet werden kann, da die Schutzwände 174-i, die Anschlusskontakte 181-i, und die Rasteinrichtungen allesamt mit geringerer Dicke als die Schlitzbreite der Schlitze in der Stromsammelschiene 2 ausgebildet sind, und somit in beliebige Schlitze einführbar sind.

Deutlich erkennbar in Fig. 3 ist auch, wie die Rastzähne 121-i die Schlitze in einer in der Berührungsschutzschiene 3 eingesetzten Stromsammelschiene 2 (in Fig. 3 nicht dargestellt, aber in Fig. 20 beispielhaft zu sehen) beidseitig (d.h. an beiden Längsenden der Schlitze) hintergreifen würden. Somit kann die Vorrichtung 100 in diesem Zustand nicht einfach aus der Stromsammelschiene 2 herausgezogen werden. Hierzu müssen die einander gegenüberliegenden und voneinander abgewandten Rastzähne an beiden Enden der Schlitze aufeinander zu bewegt werden, sodass die Rastzähne die Schlitze nicht mehr hintergreifen.

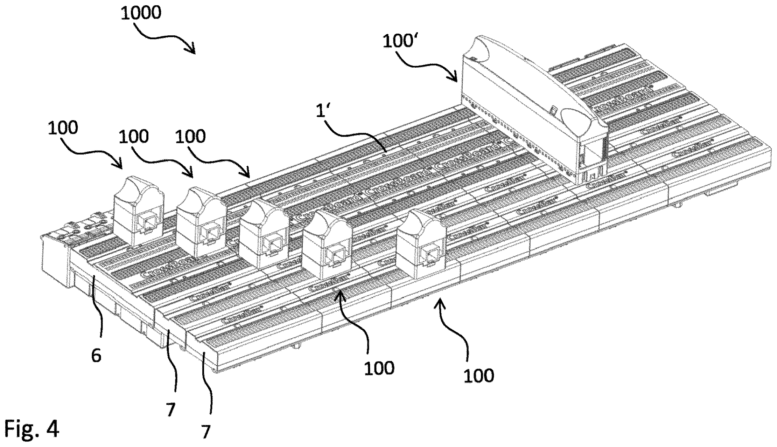

Fig. 4 zeigt beispielhaft ein Stromsammelschienenmodul 1' mit 5-poliger Ausführung, d.h. mit fünf Stromsammelschienen 2. Dieses umfasst ein dreireihiges Bauteil 6 mit 3 Stromsammelschienen und ineinander integrierten Berührungsschutzschienen, hier das so genannte Crossboard (eingetragene Marke), sowie zwei daran erweiternd angeflanschte, jeweils einreihige Bauteile 7 mit je einer Stromsammelschiene und einer Berührungsschutzschiene, hier die so genannte Crossbar (eingetragene Marke).

Auf dem so gebildeten Stromsammelschienenmodul 1` sind fünf der einpoligen Vorrichtungen 100 angeordnet und verrastet, an jedem Pol eine. Gut ersichtlich ist, wie eine übersichtliche Kabelführung erzielt werden kann, indem die Vorrichtung 100 mit ihren Einführöffnungen 108 alle in derselben Richtung ausgerichtet und entlang der Schienenachse (d.h. der longitudinalen Ausdehnung jeder Stromsammelschiene für sich) leicht versetzt verrastet werden, sodass ein Kabelbaum ordentlich und platzsparend mit allen Polen des Stromsammelschienenmoduls 1` elektrisch verbunden werden kann.

Auf der rechten Seite von Fig. 4 ist beispielhaft gezeigt, dass erfindungsgemäße Vorrichtungen 100' selbstverständlich auch mehrpolig (hier: 4-polig) ausgebildet sein können. Eine Verrastung kann dabei an ausgewählten Reihen (z.B. der ersten und der letzten) oder an allen Reihen erfolgen.

Fig. 4 zeigt somit auch ein System 1000 gemäß einer weiteren Ausführungsform der vorliegenden Erfindung, welches ein Stromsammelschienenmodul 1' sowie (mindestens) eine erfindungsgemäße Vorrichtung 100; 100' umfasst.

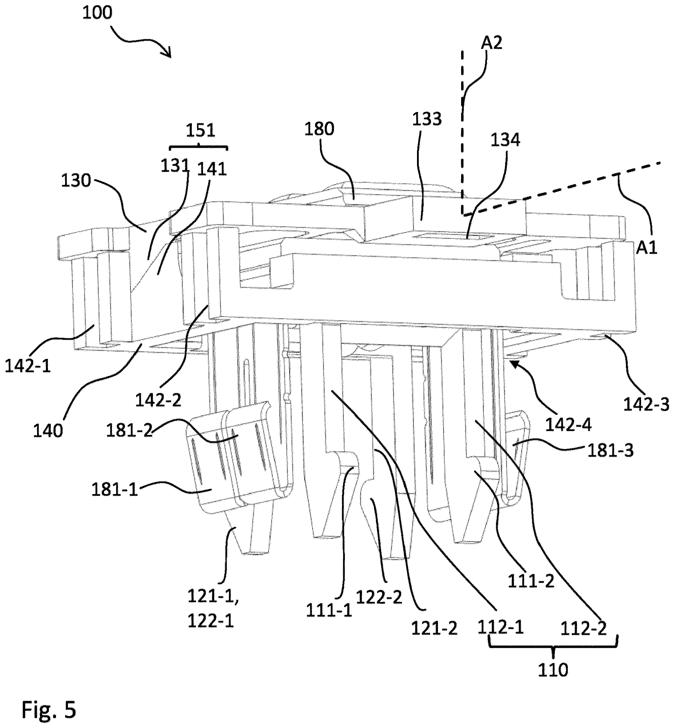

Fig. 5 zeigt nun eine Detailansicht einiger Bestandteile der Vorrichtung 100 zur Verdeutlichung des Ver- und Entrastungsmechanismus. Aus der Bildebene herausragend ist das erste Betätigungselement 133 erkennbar, mit einem darin ausgebildeten Schlitz 134. In diesen kann beispielswiese ein Schlitz-Schraubendreher eingeführt werden, um das erste Betätigungselement 133 entlang einer ersten Bewegungsachse A1 zu bewegen, hier: aus der Bildebene heraus zu ziehen. In dem Mittelstück 172 des Gehäuses 170 ist dazu auch eine Aussparung in einem der Unterschale 171 zugewandten Bodenabschnitt vorgesehen, sodass der Schlitz 134 für einen Schraubendreher durch die Einführöffnung 108 und diese Aussparung hindurch zugänglich ist. Dies ist auch in Fig. 1 an der Vorderseite (d.h. der Seite mit der Einführöffnung 108) der Vorrichtungen 100 gut sichtbar.

Das erste Schlittenelement 130, welches vorzugsweise - inklusive des ersten Betätigungselements 133 - einstückig ausgebildet ist, ist entlang der ersten Bewegungsachse A1 linear beweglich gelagert, z.B. in der Unterschale 171 des Gehäuses 170, und zwar vorzugweise nur entlang dieser Bewegungsachse A1 beweglich. Das heißt, das erste Schlittenelement 130 ist insbesondere auch an einer Bewegung entlang einer zweiten Bewegungsachse A2, welche auf der ersten Bewegungsachse A1 senkrecht steht, gehindert, beispielsweise durch entsprechende Vorsprünge in dem Mittelstück 172 des Gehäuses 170 und/oder einen Absatz in der Unterschale 171. Das erste Schlittenelement 130 ist außerdem an einer Bewegung entlang einer dritten Bewegungsachse senkrecht zu den Bewegungsachsen A1, A2 durch Führungen oder Seitenwände in der Unterschale 171 gehindert.

Zur Verdeutlichung der Bewegungsachsen ist es hilfreich, sich vorzustellen, dass das im Wesentlichen flach ausgebildete erste Schlittenelement 130 im Wesentlichen in einer Ebene liegt, welche von der ersten Bewegungsachse A1 und der dritten Bewegungsachse (entlang welcher sich bei der Vorrichtung 100 jedoch vorteilhaft nichts bewegt) aufgespannt ist. Die Anschlusskontakt 181-i und die Rastelemente 112-i, 122-i hingegen liegen im Wesentlichen in Ebenen, welche parallel zu einer Ebene liegen, welche durch die erste Bewegungsachse A1 und die zweite Bewegungsachse A2 aufgespannt wird. Erste, zweite und dritte Bewegungsachse entsprechen somit einem orthogonalen Dreibein.

Für Fälle, in denen die Einführöffnung 108 schwer zugänglich ist oder belegt ist, ist in der Unterschale 171 an der Rückseite eine Öffnung 177 vorgesehen, über die ein in der Rückseite des ersten Schlittenelements 130 ausgebildeter Blindschlitz als ein zweites Betätigungselement 136 zugänglich ist. Dieses zweite Betätigungselement 136 kann beispielsweise mittels eines Schlitz-Schraubendrehers nach innen gedrückt werden, um das erste Schlittenelement 130 entlang der ersten Bewegungsachse A1 nach vorne zu bewegen.

Weiterhin ist in Fig. 5 ersichtlich, dass an dem ersten Schlittenelement 130 (mindestens) ein erster Schrägabschnitt 131 ausgebildet ist, welcher eine Neigung (zwischen 0° und 90°, bevorzugt zwischen 20° und 70°) gegenüber der ersten Bewegungsachse A1 aufweist. Genauer gesagt weist der (mindestens eine) erste Schrägabschnitt 131 eine plane Fläche auf, welche um die besagte Neigung gegenüber einer Ebene verkippt ist, in welcher sich das erste Betätigungselement 133 bei seiner Betätigung bewegt.

Fig. 5 zeigt auch, dass an dem zweiten Schlittenelement 140 (mindestens) ein gegengleicher zweiter Schrägabschnitt 141 ausgebildet ist, d.h., welcher somit dieselbe Neigung wie der (mindestens eine) erste Schrägabschnitt 131 des ersten Schlittenelements 130 aufweist, aber dessen Flächennormale der des ersten Schrägabschnitts 131 entgegen zeigt. In der in Fig. 5 gezeigten Situation liegen der (mindestens eine) erste und der (mindestens eine) zweite Schrägabschnitt 131, 141, (jeweils) genau aneinander an.

In der gezeigten Ausführungsform der Vorrichtung 100 weist das erste Schlittenelement 130 zwei erste Schrägabschnitte 131 auf, jeweils einen auf jeder Seite des Betätigungselements 133. Ebenso weist das zweite Schlittenelement 140 zwei an den ersten Schrägabschnitten anliegende zweite Schrägabschnitt 141 auf. Dies verbessert aufgrund der Symmetrie die mechanische Betätigung der Schlittenelemente 130, 140, wie sie im Folgenden beschrieben wird. Es versteht sich, dass auch je Schlittenelement 130, 140 nur ein einzelner Schrägabschnitt 131, 141, oder mehr als zwei Schrägabschnitte, vorgesehen sein können, vorteilhaft beispielsweise ein Paar von Schrägabschnitten 131, 141 pro gegenüberliegendem Paar von Rastzähnen und/oder pro Pol des Stromsammelschienenmoduls 1', an welchem die Vorrichtung 100; 100' anliegt.

Das zweite Schlittenelement 140 ist bei der Vorrichtung 100 unterhalb des ersten Schlittenelements 130 angeordnet, d.h. näher an den Rastzähnen 111-i, 211-i und den Anschlusskontakten 181-i, zwischen dem ersten Schlittenelement 130 und der Unterschale 171. Das zweite Schlittenelement 140 weist außen vier Führungsnuten 142-1, 142-2, 142-3, 142-4 auf, beispielsweise gebildet durch Doppelbügel. Durch die vier Führungsnuten 142-i wird das zweite Schlittenelement 140 derart geführt, dass es sich ausschließlich entlang der zweiten Bewegungsachse A2 bewegen kann, d.h. in Fig. 5 ausschließlich nach oben und unten. Da das zweite Schlittenelement 140 oben an dem ersten Schlittenelement 130, insbesondere mit seinen zweiten Schrägabschnitten 141 an dessen ersten Schrägabschnitten 131, anliegt, kann es sich ausschließlich vom ersten Schlittenelement 130 weg bewegen, d.h. in Fig. 5 nach unten.

In Fig. 5 ist nun sehr gut ersichtlich, dass die ersten Schrägabschnitte 131 und die zweiten Schrägabschnitte 141 zusammen eine erste mechanische Umsetzeinrichtung 151 bilden: bei Zug an dem ersten Betätigungselement 133 drücken die ersten Schrägabschnitte 131 des gegen Bewegung entlang der zweiten Bewegungsachse A2 gesicherten ersten Schlittenelements 130 gegen die zweiten Schrägabschnitte 141 des gegen Bewegung entlang der ersten Bewegungsachse A1 gesicherten zweiten Schlittenelements 140. Als Folge wird durch die erste Umsetzeinrichtung 151 die lineare Bewegung des ersten Schlittenelements 130 entlang der ersten Bewegungsachse A1 in eine lineare Bewegung des zweiten Schlittenelements 140 entlang der zweiten Bewegungsachse A2 des zweiten Schlittenelements 140 umgesetzt: das zweite Schlittenelement 140 wird von dem ersten Schlittenelement 130 weg, in Richtung der Anschlusskontakte 181-i (in Fig. 5 nach unten) gedrückt. Im weiteren Verlauf der Beschreibung wird ersichtlich werden, wie dies im Gleichzug auch eine Entrastung der Vorrichtung 100 bewirkt.

Zunächst ist noch zu Fig. 5 zu erwähnen, dass dort ersichtlich ist, dass jede der Rasteinrichtungen 110, 120 jeweils zwei längliche, flach ausgebildete Rastelemente 112-1, 112-2, 122-1, 122-2 besitzt, welche jeweils an ihren von den Schlittenelementen 130, 140 abgewandten Enden in einem jeweiligen Rastzahn 111-1, 111-2, 121-1, 121-2 enden. Die Rastelemente 112-1, 112-2 122-1, 122-2 innerhalb einer Rasteinrichtung 110, 120 sind jeweils zueinander parallel und deckungsgleich ausgebildet und angeordnet, sodass sie gleichzeitig in die zueinander parallel angeordneten Schlitze der Berührungsschutzschiene 3 und/oder der Stromsammelschiene 2 eingreifen können.

Je ein Rastelement 112-1, 112-2 der ersten Rasteinrichtung 110 und je ein Rastelement 122-1, 122-2 der zweiten Rasteinrichtung 120 sind mit ihren flachen Körpern jeweils in derselben Ebene angeordnet, sodass sie beide in denselben Schlitz der Berührungsschutzschiene 3 und/oder der Stromsammelschiene 2 eingreifen können, damit die beiden voneinander weg zeigenden Rastzähne 111-i, 121-i den jeweiligen Schlitz beidseitig hintergreifen können. Die so zusammenwirkenden Rastzähne 111-i, 121-i zweier verschiedener Rasteinrichtungen 110, 120 werden im Folgenden (außer als "zusammenwirkend") auch als "gegenüberliegend" bezeichnet.

Das Vorspannungselement 107 ist angeordnet, um diese jeweils zusammenwirkenden Rastzähne 111-i, 121-i zweier verschiedener Rasteinrichtungen 110, 120 voneinander weg zu drücken. Die Rastelemente 112-i, 122-i und insbesondere die Rastzähne 111-i, 121-i laufen unten mit nach außen gewandten Schrägen spitz zu. Mit diesen Spitzen können die Rastelemente 112-i, 122-i auch ohne Betätigung des Betätigungselements 133 in die Schlitze des Stromsammelschienenmoduls 1 eingeführt werden. Durch Krafteinwirkung auf die Vorrichtung 100 in Richtung des Stromsammelschienenmodul 1 bewirken dann die Schrägen der Rastzähne 111-i, 121-i eine Bewegung der gegenüberliegenden Rastzähne 111-i, 121-i jeweils zueinander hin, bis sie nah genug beieinanderliegen, damit sie den Schlitz vollständig passieren können. Aufgrund der Vorspannung durch das Vorspannungselement 107 werden sie dann auseinander schnellen, den Schlitz beidseitig hintergreifen, und damit die Vorrichtung 100 verrasten. Die Verrastung ist somit vorteilhaft werkzeuglos möglich.

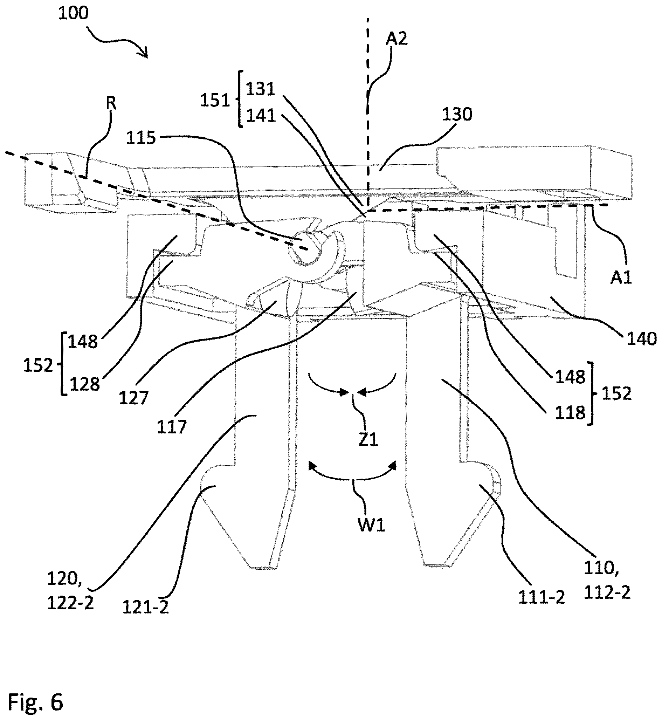

Fig. 6 zeigt im Detail in einer querschnittsartigen Darstellung, wie die lineare Bewegung des zweiten Schlittenelements 140 durch eine zweite mechanische Umsetzeinrichtung 152 in eine Bewegung der jeweils gegenüberliegenden und zusammenwirkenden Rastzähne 111-2, 121-2 zueinander Z1 bzw. voneinander weg W1 umgesetzt wird.

Die zweite mechanische Umsetzeinrichtung 152 beinhaltet mindestens einen Stempelabschnitt 148 an dem zweiten Schlittenelement 140 sowie mindestens einen Schulterabschnitt 118, 128 an mindestens einer Rasteinrichtung 110, 120, wobei jeder Stempelabschnitt 148 so angeordnet und ausgebildet ist, dass er, bei der Bewegung des zweiten Schlittenelements 140 entlang der zweiten Bewegungsachse A2 in einer von dem ersten Schlittenelement 130 abgewandten Richtung an einem jeweiligen Schulterabschnitt 118, 128 ein Drehmoment auf diejenige Rasteinrichtung 110, 120 ausübt, welche den Schulterabschnitt 118, 128 beinhaltet.

Die Rasteinrichtungen 110, 120 sind, jeweils einzeln, um eine gemeinsame Rotationsachse R rotierbar angeordnet. Bei der Vorrichtung 100 weist jede Rasteinrichtung 110 einen eigenen Schulterabschnitt 118, 128 auf, welche jeweils am Fuß der Rastelemente 112-i, 122-i und von der Rotationsachse R abgewandt angeordnet und ausgebildet sind. Das zweite Schlittenelement 140 weist zwei Stempelabschnitte 148 auf, von denen jeweils einer an jeweils einem der Schulterabschnitte 118, 128 anliegt.

Bewegt sich das zweite Schlittenelement 140 entlang der zweiten Bewegungsachse A2 nach unten (d.h. von dem ersten Schlittenelement 130 weg), drücken die Stempelabschnitte 148 auf die Schulterabschnitte 118, 128. Durch das so ausgeübte Drehmoment rotieren die Rastelemente 112-i, 122-i aufeinander zu, sodass die Rastzähne 111-i, 121-i auf einer gekrümmten Bewegung zueinander hin bewegt werden, wie in Fig. 6 mit Z1 bezeichnet ist.

Jede Rasteinrichtung 110, 120 weist dabei eine Federaufnahme 117, 127 auf, zwischen welchen das als Schraubenfeder ausgebildete Vorspannungselement 107 eingefasst ist, um eine Vorspannung auf die Rasteinrichtungen 110, 120 in einer Richtung voneinander weg (in Fig. 6 mit W1 bezeichnet) auszuüben. Durch Ziehen an dem ersten Betätigungselement 133 (und/oder durch Drücken des zweiten Betätigungselements 136) bewegen sich somit die jeweils zusammenwirkenden Rastzähne 111-i, 121-i gegen die Federkraft des Vorspannungselements 107 aufeinander zu (Z1). Damit wird der Abstand zwischen den Rastzähnen 111-i, 121-i irgendwann so gering, dass sie die Halteöffnung 5 nicht mehr beidseitig (oder gar nicht mehr) hintergreifen, und sich die Vorrichtung 100 somit im entrasteten Zustand befindet. Auf diese Weise kann - durch simples Betätigen des ersten und/oder des zweiten Betätigungselements 133, 136 - die Vorrichtung 100 entrastet werden.

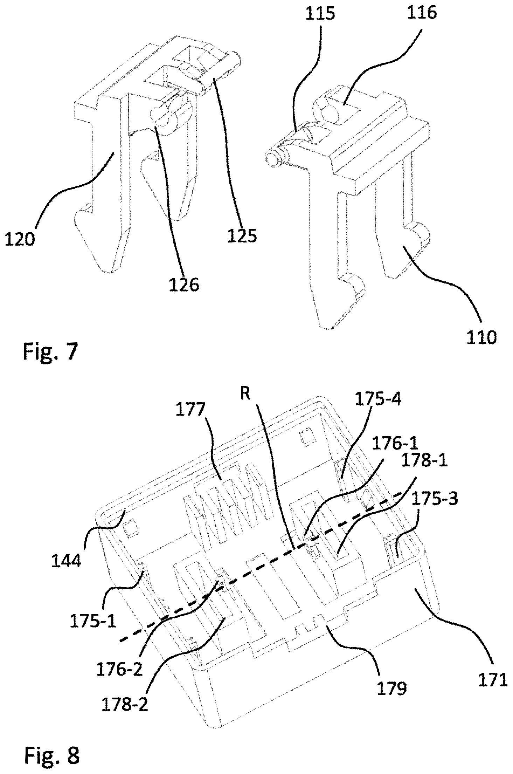

Fig. 7 zeigt eine vorteilhafte Ausgestaltung der Rasteinrichtungen 110, 120. Wie dort ersichtlich ist, weist jede Rasteinrichtung 110, 120 einen Wellenabschnitt 115, 125 sowie einen damit fluchtenden Lagerabschnitt 116, 126 auf, derart, dass jeder Lagerabschnitt 116, 126 jeweils den Wellenabschnitt 125, 115 der anderen Rasteinrichtung 120, 110 teilweise aufnehmen und lagern kann. Die Lagerabschnitte 116, 126 können so ausgebildet sein, dass die Wellenabschnitte 115, 125 darin eingeclipst werden können. Insbesondere bei Fertigung der Rasteinrichtungen 110, 120 jeweils einstückig aus einem Kunststoff ist so ein einfacher Zusammenbau möglich.

Vorliegend ist die Verbindung vorteilhaft nach dem Rohrzangenprinzip ausgeführt: die Wellenabschnitte 115, 125 weisen jeweils entlang ihres Umfangs sowohl zwei kreisbogenförmige Abschnitte als auch zwei zueinander parallele gerade Abschnitte auf. Die Lagerabschnitte 116, 126 weisen entlang ihres Umfangs an einer Stelle einen Einlass auf, in welchen ein jeweiliger Wellenabschnitt 115, 125 (dann und nur dann) einführbar ist, wenn seine parallelen geraden Abschnitte zu der Einführungsrichtung des Einlasses im Wesentlichen parallel angeordnet sind. In Fig. 6 ist dies gut zu erkennen; dort ist ein Zustand gezeigt, in welchem der Wellenabschnitt 115 gegenüber seiner Einführungsrichtung in den Lagerabschnitt 126 um ca. 90° verdreht ist. Aufgrund des zweiten Schlittenelements 140 und/oder der zweiten mechanischen Umsetzeinrichtung 152 können die Rasteinrichtungen 110, 120, wenn sie einmal ineinander sowie in der Unterschale 171 (siehe auch Fig. 8 und die nachfolgende dazugehörige Beschreibung) gelagert sind, vorteilhaft nicht mehr so stark ausgelenkt (bzw. bezüglich einander verdreht) werden, dass die parallelen Abschnitte der Wellenabschnitt 115, 125 wieder parallel zu der Einführungsrichtung der entsprechenden Wellenabschnitte 115, 125 zu liegen kommen. Gegenüber der Einclips-Lösung ist die Lösung nach dem Rohrzangenprinzip noch robuster auch bei starker Beanspruchung der Rasteinrichtungen. Aufgrund des Formschlusses beim Lager sind hierbei außerdem auch noch andere Materialien außer Kunststoff möglich, obwohl Kunststoff bevorzugt ist.

Fig. 8 zeigt eine schematische Schrägansicht der Unterschale 171 von oben. Innen am Boden der Unterschale 171 sind symmetrisch zwei Aufbauten angeordnet, welche jeweils an einer einander zugewandten Seite einen Lagerabschnitt 176-1, 176-2 aufweisen. Jeder der Lagerabschnitte 176-i nimmt einen der Lagerabschnitte 116, 126 der Rasteinrichtungen 110, 120 teilweise auf, sodass die Rasteinrichtungen 110, 120 derart an der Unterschale 171 - um die Rotationsachse R (oder: Drehachse) drehbar - aufgehängt sind. In den Aufbauten ist außerdem jeweils ein den Boden der Unterschale 171 durchquerender Schlitz 178-1, 178-2 ausgebildet. Durch diese Schlitze 178-i werden die Anschlusskontakte 181-i hindurch an die Unterseite der Unterschale 171 geführt.

Gut erkennbar ist in Fig. 8 auch die Aussparung 179 (oder: Ausnehmung) in der Unterschale 171, in welcher das erste Betätigungselement 133 vor seiner Betätigung angeordnet ist, vorzugsweise ohne vor der Außenwand der Unterschale 171 vorzustehen. Durch die Aussparung 179 kann das erste Betätigungselement 133 auch bei seiner Betätigung ganz oder teilweise aus der Unterschale 171 herausgezogen werden. Sichtbar ist außerdem auch die Öffnung 177 in der Unterschale 171, durch welche das zweite Betätigungselement 136 von außen betätigbar ist.

An der Innenseite der Außenwand der Unterschale 171 sind außerdem vier Führungsgrate 175-i angeordnet, welche von den Führungsnuten 142-i des zweiten Schlittenelement 140 umschlossen werden, um dieses zu führen. Außerdem an der Innenseite der Außenwand der Unterschale 171 ist ein fast ganz umlaufender Absatz 144 ausgebildet, auf welchem das erste Schlittenelement 130 gelagert und durch die Außenwand an Bewegungen entlang der zweiten und dritten Bewegungsachse gehindert wird. Nach oben wird die Bewegung des ersten Schlittenelements 130 durch das Mittelstück 172 des Gehäuses 170 begrenzt, welches mit den in Fig. 1 gut sichtbaren Laschen in Rastnippel an der Innenseite der Außenwand der Unterschale 171 eingeclipst werden kann. Zwei der Rastnippel sind in Fig. 8 an der Innenwand der Rückwand der Unterschale 171 erkennbar.

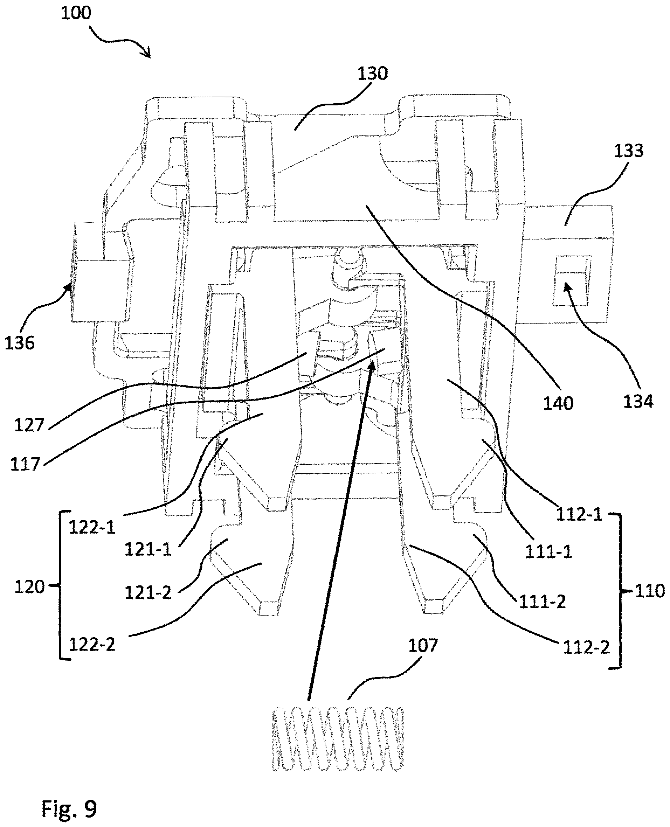

Fig. 9 zeigt nochmals die Anordnung der Rasteinrichtungen 110, 120 im Zusammenspiel mit dem ersten Schlittenelement 130 und dem zweiten Schlittenelement 140 von schräg unten.

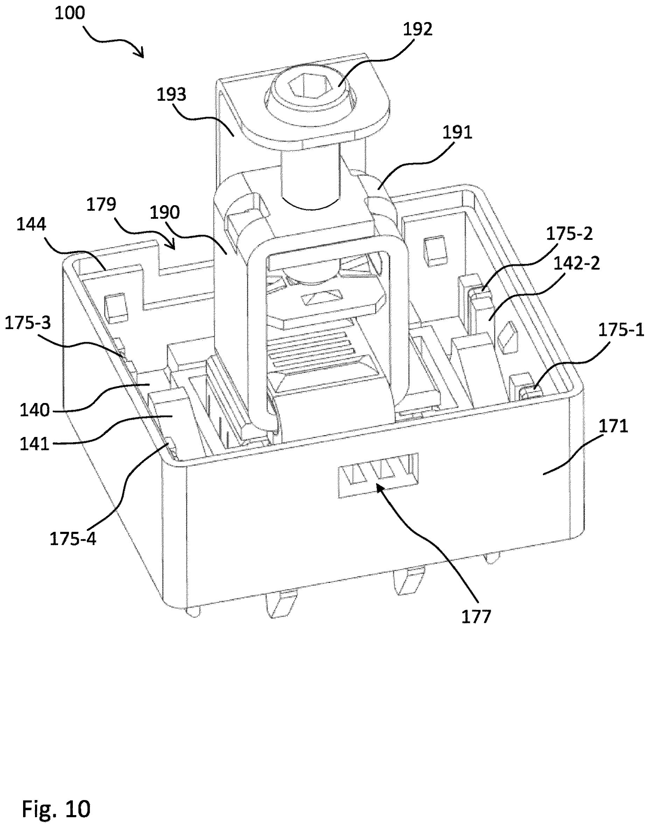

Fig. 10 zeigt noch das Funktionsmodul 190, hier eine Rahmenklemme 191, wie es mit dem Funktionsanschluss 180, und somit mit der Vorrichtung 100 mechanisch und elektrisch verbunden, angeordnet ist. Der Funktionsanschluss 180 weist, wie in Fig. 1 gut erkennbar ist, einen aus einer Basisplatte, welcher auch die Anschlusskontakte 181-i entspringen, tangential entspringenden und über die Basisplatte rückgebogenen Anschlussbügel auf. Fig. 1 zeigt, wie die Rahmenklemme 191 zwischen Basisplatte und Anschlussbügel eingesteckt wird. Mittels einer Schraube 192 und einem Drahtschutzbügel 193 kann ein durch die Einführöffnung 108 eingeführtes Kabel sicher und stabil elektrisch und mechanisch mit der Vorrichtung 100 verbunden werden.

Das Gehäuse 170, insbesondere dessen Mittelstück 172, kann an das jeweilige Funktionsmodul 190 angepasst werden. Wie in Fig. 1 ersichtlich ist, weist das Mittelstück 172 vorliegend einen turmartigen Aufbau auf, welcher die Rahmenklemme 191 an vier Seiten umschließt und eine Öffnung oben freilässt, durch welche die Schraube 192 auf- oder zugeschraubt werden kann.

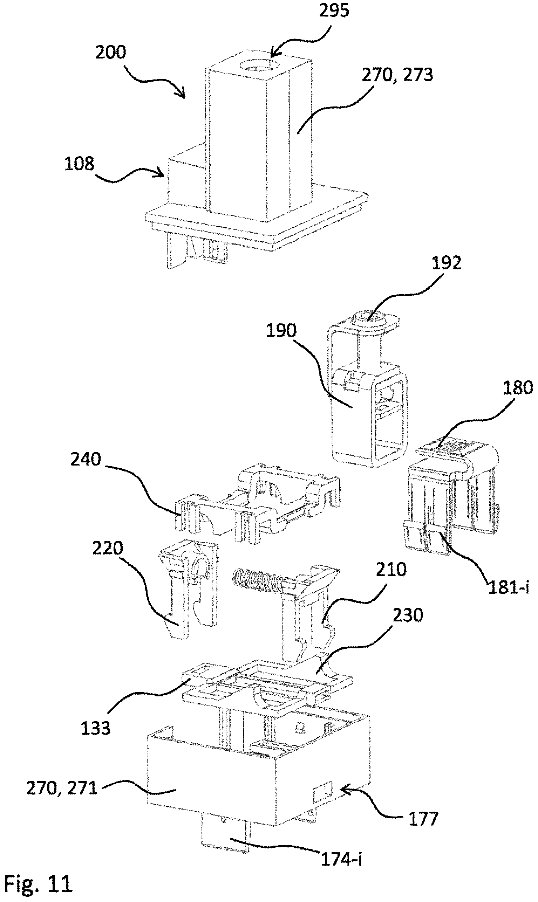

Fig. 11 zeigt eine schematische Explosionsdarstellung von Teilen einer Vorrichtung 200 gemäß einer weiteren Ausführungsform der vorliegenden Erfindung, d.h. einer weiteren Vorrichtung zur Ver- und Entrastung eines - insbesondere elektrischen - Funktionsmoduls 190 an mindestens einer Halteöffnung 5 eines Stromsammelschienenmoduls 1; 1'.

Die Vorrichtung 200 ist eine Variante der Vorrichtung 100 und unterscheidet sich von dieser vornehmlich dadurch, dass sich bei der Vorrichtung 200 die Rasteinrichtungen 210, 220 nicht auf einer gekrümmten Bahn (d.h. durch jeweilige Drehungen um die gemeinsame Rotationsache R) aufeinander zu und voneinander weg bewegen, sondern auf linearen Bahnen. Dementsprechend sind viele Bestandteile der Vorrichtung 200 ähnlich wie bei der Vorrichtung 100 ausgebildet, sodass im Folgenden vornehmlich auf die Unterschiede eingegangen wird. Einige weitgehend oder vollständig, geometrisch oder funktional, gleich ausgebildete Bestandteile werden mit denselben Bezugszeichen wie bei Vorrichtung 100 bezeichnet werden, während andere neue Bezugszeichen erhalten, ohne dass sie deswegen jedoch zwangsläufig anders ausgebildet sein müssen. Es versteht sich, dass das erfindungsgemäße System 1000 auch eine oder mehrere der Vorrichtungen 200, oder ganz anderer Ausführungsform der vorliegenden Erfindung umfassen kann.

Gemäß Fig. 11 umfasst die Vorrichtung 200 ein Gehäuse 270, welches aus einer Unterschale 271 und einer darin einclipsbaren Oberschale 273 besteht. Ein turmartiger Aufbau der Oberschale 273 liegt bei dieser Ausführungsform frei, sodass ein Schraubloch 295 an dessen Oberseite Zugriff auf die innen angeordnete Schraube 192 gewährt.

Ein Unterschied zur Vorrichtung 100 besteht darin, dass bei der Vorrichtung 200 das erste Schlittenelement 230, also jenes, welches (z.B. mittels des ersten Betätigungselements 133) durch einen Benutzer zum Entrasten der Vorrichtung 200 bewegt wird, zwischen der Unterschale 271 und dem zweiten Schlittenelement 240 angeordnet ist. Bei der Vorrichtung 100 war das zweite Schlittenelement 140 zwischen der Unterschale 171 und dem ersten Schlittenelement 130 angeordnet. Dementsprechend wird bei dem Mechanismus der Vorrichtung 200 auch das zweite Schlittenelement 240 durch das erste Schlittenelement 230 zum Entrasten der Vorrichtung 200 nach oben gedrückt, d.h. von der Unterschale 271 weg. Der Mechanismus wird im Folgenden noch näher erläutert werden.

Es versteht sich jedoch, dass auch bei der Vorrichtung 200 das zweite Schlittenelement 240 zwischen dem ersten Schlittenelement 230 und der Unterschale 171 angeordnet sein kann und/oder zum Entrasten von dem ersten Schlittenelement 230 nach unten, Richtung Unterschale 271 gedrückt werden kann. Analog dazu kann auch bei der Vorrichtung 100 das erste Schlittenelement 130 zwischen der Unterschale 171 und dem zweiten Schlittenelement 140 angeordnet sei und/oder das zweite Schlittenelement 140 durch das erste Schlittenelement 130 zum Entrasten nach oben, d.h. von der Unterschale 171 weg, gedrückt werden kann. Für den Fachmann ist es nach Lektüre der vorliegenden Lehre klar, wie die jeweiligen Umsetzeinrichtungen dafür jeweils geringfügig modifiziert werden können.

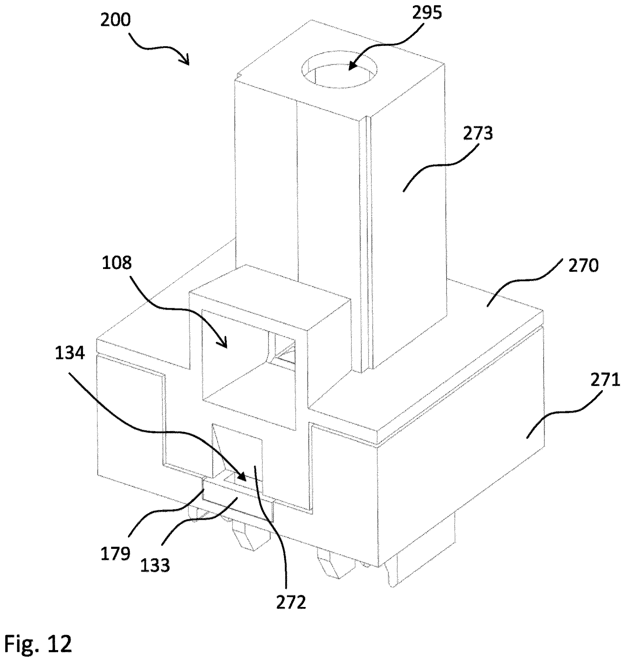

Fig. 12 zeigt die Vorrichtung 200 schräg von ihrer Vorderseite, d.h., der Seite mit der Einführöffnung 108. Auch die Unterschale 271 weist eine Aussparung 179 in ihrer Vorderseite auf, um das erste Betätigungselement 133 aufzunehmen und es zu ermöglichen, dass das erste Betätigungselement 133 aus der Unterschale 271 herausgezogen werden kann. Eine an der Aussparung 179 anliegende Schräge 272 in der Oberschale 273 ermöglicht es, einen Schlitz-Schraubendreher leicht in den Schlitz 134 des ersten Betätigungselements 133 einzuführen und gegen die Schräge 272 zu hebeln, um das erste Betätigungselement 133 leichter herauszuziehen bzw. herauszudrücken.

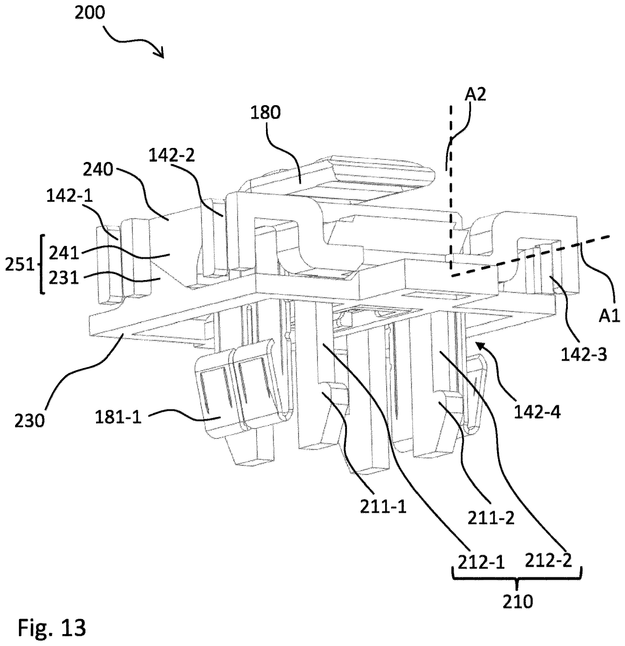

Fig. 13 illustriert die Funktionsweise der ersten mechanischen Umsetzeinrichtung 251 des Vorrichtung 200: Auch hier weisen erstes Schlittenelement 230 und zweites Schlittenelement 240 wieder jeweils mindestens einen (hier: jeweils zwei) Schrägabschnitt 231, 241 auf, welche aneinander anliegen. Im Unterschied zur Vorrichtung 100 liegt jedoch hier das erste Schlittenelement 230 unten, sodass es bei linearer Bewegung entlang der ersten Bewegungsachse A1 aus der Zeichenebene heraus das zweite Schlittenelement 240 nach oben in Richtung des Funktionsanschlusses 180 drückt.

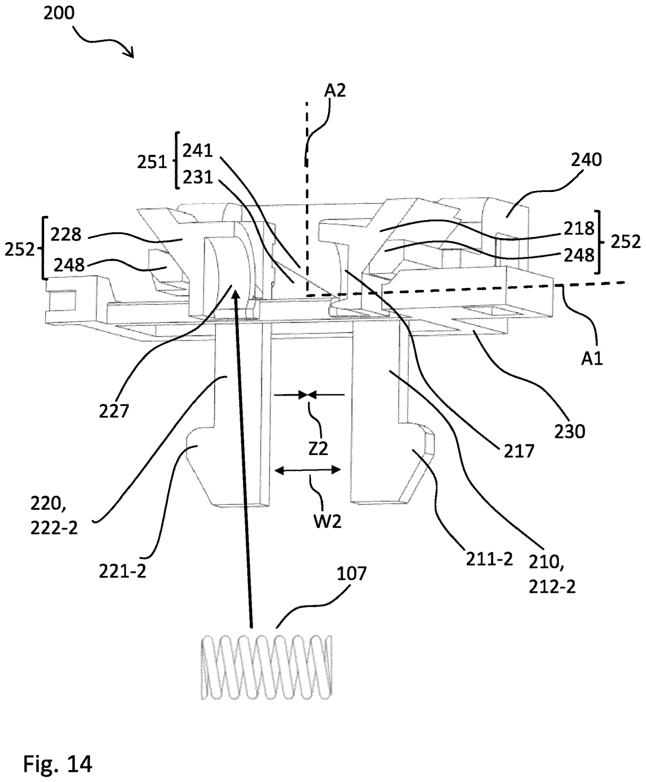

Fig. 14 zeigt eine schematische Querschnittsansicht zur weiteren Erläuterung des Entrastungsmechanismus der Vorrichtung 200. Bei der Vorrichtung 200 weisen die Rasteinrichtungen 210, 220 an ihren Fußenden (d.h. an den von den Rastzähnen 211-i, 221-i abgewandten Enden) jeweils einen dritten Schrägabschnitt 218, 228 auf. Dieser besteht jeweils aus einer gegenüber der Ebene, in welcher sich das erste Betätigungselement 133 bewegt, geneigten Fläche. Zwischen den miteinander zusammenwirkenden Rastzähnen 211-i, 221-i der beiden Rasteinrichtungen 210, 220 sowie zwischen den beiden dritten Schrägabschnitten 218, 228 kann eine fiktive Spiegelebene gezogen werden.

Jeweils außen an den dritten Schrägabschnitten 218, 228 liegt jeweils ein vierter Schrägabschnitt 248 des zweiten Schlittenelements 240 an. Die dritten und vierten Schrägabschnitte 218, 228, 248 bilden gemeinsam eine zweiten mechanische Umsetzeinrichtung 252 der Vorrichtung 200. Wie bei der ersten mechanischen Umsetzeinrichtung 251 liegen auch bei der zweiten mechanischen Umsetzeinrichtung 252 die Schrägabschnitt 218, 248 bzw. 228, 248 aneinander an.

Wird nun das zweite Schlittenelement 240 entlang der zweiten Bewegungsachse A2 nach oben gedrückt, wird die Bewegung der Rasteinrichtungen 210, 220 nach oben durch die Basisplatte des Funktionsanschlusses 180 begrenzt. Die zweite mechanische Umsetzeinrichtung 252 bewirkt somit, dass die beiden Rasteinrichtungen 210, 220 sich linear aufeinander zu bewegen, wie in Fig. 14 mit Z2 bezeichnet ist. Hierzu können die Rasteinrichtungen 210, 220 vorteilhaft durch Führungen zu einer linearen Bewegung entlang der ersten Bewegungsachse A1 geführt werden.

Zwischen einer jeweiligen Federaufnahme 217, 227 der Rasteinrichtungen 210, 220 ist wiederum ein Vorspannungselement 107, etwa eine Schraubenfeder 107, angeordnet und eingefasst, welche eine Vorspannung entgegen der Bewegung Z2 ausübt, d.h., welche die Rasteinrichtungen 210, 220 voneinander wegdrückt, wie in Fig. 14 mit W2 bezeichnet ist. Der Benutzer muss somit bei der Betätigung, d.h. Bewegung, des ersten Schlittenelements 230 zum Entrasten der Vorrichtung 200 gegen die Vorspannung des Vorspannungselements 107 arbeiten.

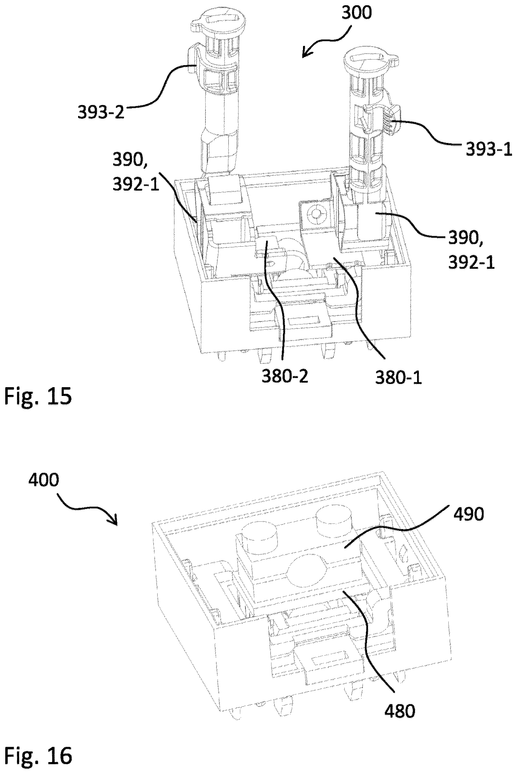

Fig. 15 zeigt eine Vorrichtung 300 gemäß einer weiteren Ausführungsform der vorliegenden Erfindung. Die Vorrichtung 300 ist eine Variante der Vorrichtung 200 und unterscheidet sich von dieser im Wesentlichen darin, dass das Funktionsmodul 390, welches hier ebenfalls ein Stromeinspeisemodul ist, welches mit dem Stromsammelschienenmodul 1 verrastet werden soll, zwei Federzugklemmen 392-1, 392-2 aufweist. Statt mit einer gemeinsamen Basisplatte ist jede Federzugklemme 392-1, 392-2 über einen jeweiligen Funktionsanschluss 380-1, 380-2 mit zwei Anschlusskontakten jeweils einerseits der Rasteinrichtungen elektrisch verbunden. Jede Federzugklemme 392-1, 392-2 kann über ein entsprechendes Betätigungselement 383-1, 393-2 geöffnet werden.

Es versteht sich, dass das Funktionsmodul 390 auch mit nur einer Federzugklemme 392-i ausgebildet werden kann, und dass statt der Mechanik der Vorrichtung 200 mit linearer Bewegung Z2, W2 der Rasteinrichtungen 210, 220 bevorzugt auch die Mechanik der Vorrichtung 100 mit der rotatorischen Bewegung Z1, Z1 der Rasteinrichtungen 110, 210 vorgesehen sein kann, d.h., dass die Vorrichtung 300 auch als Variante der Vorrichtung 100 ausgebildet werden kann.

Fig. 16 zeigt eine Vorrichtung 400 gemäß einer weiteren Ausführungsform der vorliegenden Erfindung. Die Vorrichtung 400 ist eine Variante der Vorrichtung 200 und unterscheidet sich von dieser im Wesentlichen darin, dass das Funktionsmodul 490 der Vorrichtung 400 als ein Stromeinspeisemodul mit einer Schellenklemme ausgebildet ist, die mit einer Basisplatte eines Funktionsanschluss 480 der Vorrichtung 400 elektrisch und physisch verbunden ist.

Es versteht sich, dass die Vorrichtung 400 auch als Variante der Vorrichtung 100 ausgebildet werden kann, d.h. mit rotatorischer Bewegung Z1, W1 der Rasteinrichtungen 110, 210.

Fig. 17 zeigt eine Vorrichtung 500 gemäß einer weiteren Ausführungsform der vorliegenden Erfindung, wobei Fig. 18 Details isoliert zeigt. Die Vorrichtung 500 ist eine Variante der Vorrichtung 200 und unterscheidet sich von dieser im Wesentlichen darin, dass das Funktionsmodul 590 der Vorrichtung 500 ein Stromeinspeisemodul mit einem Stehbolzen ist, welcher elektrisch/galvanisch mit einer Basisplatte 582 des Funktionsanschlusses 580 der Vorrichtung 500 verbunden ist. An den Stehbolzen kann mit Hilfe der Mutter ein zugehöriger Kabelschuh angeschlossen werden.

Fig. 18 zeigt, dass in dieser Ausführungsform, aber auch in anderen, die einzelnen Anschlusskontakte (hier: Anschlusskontakte 581) jeweils mit einem umgebogenen Flansch unten an der Basisplatte 582 des Funktionsanschlusses 580 physisch und galvanisch, bevorzugt über eine stoffschlüssige Schweißverbindung verbunden sein können.

Es versteht sich, dass die Vorrichtung 500 auch als Variante der Vorrichtung 100 ausgebildet werden kann, d.h. mit rotatorischer Bewegung Z1, W1 der Rasteinrichtungen 110, 210.

Fig. 19 zeigt verschiedene mögliche Ausgestaltungsformen 13a-13g der Anschlusskontakte 181-i, wie sie in den verschiedenen Vorrichtungen 100-500 verwendet werden können. Im Vorangehenden wurden Anschlusskontakte 181-i der Ausgestaltungsform 13g gezeigt, es sind aber auch alle anderen gezeigten Ausgestaltungsformen 13a-13f und auch nicht gezeigten Ausgestaltungsformen möglich.

Fig. 20 zeigt, wie die verschiedenen Ausgestaltungsformen 13a-13g der Anschlusskontakte 181-i in den Halteöffnungen einer geschlitzten Stromsammelschiene 2 eines Stromsammelschienenmoduls 1 eingesteckt werden können. Die Stromsammelschiene 2 kann einen U-förmigen Querschnitt aufweisen, wie in Fig. 19 gezeigt, oder auch flach ausgebildet sein. Auch weitere Querschnittsformen sind möglich, beispielsweise O-förmige Querschnitte, wobei die beiden Enden bis auf einen schmalen Spalt fast wieder zusammengeführt werden.

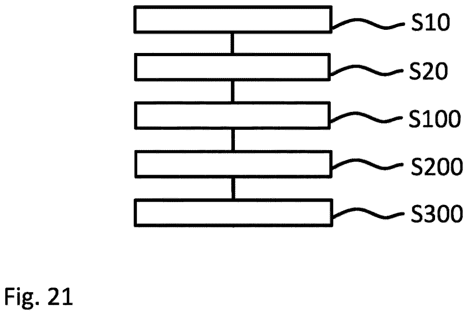

Fig. 21 zeigt ein schematisches Flussdiagramm zum Erläutern eines Verfahrens gemäß einer weiteren Ausführungsform der vorliegenden Erfindung, d.h. eines Verfahrens zum Entrasten einer Vorrichtung 100-500 an einem Stromsammelschienenmodul 1. Das Verfahren ist insbesondere mit einer Vorrichtung gemäß einer Ausführungsform der vorliegenden Erfindung, bevorzugt mit einer der Vorrichtungen 100-500 durchführbar, aber auch davon unabhängig. Daher ist das erfindungsgemäß Verfahren gemäß allen in Bezug auf die erfindungsgemäß Vorrichtung beschriebenen Optionen, Varianten und Verfeinerungen anpassbar und umgekehrt.

In einem Schritt S100 bewegt ein Benutzer ein erstes Schlittenelement 130; 230 einer Vorrichtung 100-500, welche durch das beidseitige Hintergreifen einer Halteöffnung 5 eines Stromsammelschienenmoduls 1 durch mindestens zwei voneinander abgewandte Rastzähne 111-i, 121-i; 211-i, 221-i an dem Stromsammelschienenmodul 1 verrastet ist und welche Vorrichtung 100-500 einen Funktionsanschluss 180; 380-i; 480; 580 aufweist, an welchem das elektrische Funktionsmodul 190; 390; 490; 590 befestigt ist, in einer linearen Bewegung entlang einer ersten Bewegungsachse A1, welche senkrecht zu einem longitudinalen Verlauf des Stromsammelschienenmoduls 1 angeordnet ist.

Als mechanisch-automatische Reaktion darauf wird in einem Schritt S200 ein zweites Schlittenelement 140; 240 entlang einer zweiten Bewegungsachse A2 bewegt, welche senkrecht auf der ersten Bewegungsachse A1 steht, wodurch wiederum mechanisch-automatisch bewirkt wird, dass sich voneinander abgewandte Rastzähne 111-i, 121-i; 211-i, 221-i in einem Schritt S300 aufeinander zu bewegen Z1, Z2, sodass die Rastzähne 111-i, 121-i; 211-i, 221-i die Halteöffnung 5 nicht mehr beidseitig hintergreifen, wodurch die Vorrichtung 100-500 von dem Stromsammelschienenmodul 1 entrastet ist.

Das Verfahren kann außerdem Schritte zur Verrastung umfassen und somit ein Verfahren zur Ver- und/oder Entrastung eines Funktionsmoduls 190; 390; 490; 590 mit einem Stromsammelschienenmodul 1 sein.

Zur Verrastung kann, wie im Folgenden bereits beschrieben wurde, die Vorrichtung 100-500 mit den Spitzen der Rastelemente 112-i, 122-i; 212-i, 222-i in die Halteöffnung 5 eingeführt werden und in Richtung des Stromsammelschienenmoduls 1 gedrückt werden, um die Rastelemente 112-i, 122-i; 212-i, 222-i gegen die Vorspannung des Vorspannungselements 107 aufeinander zuzubewegen (Z1, Z2), bis die Rastzähne 111-i, 121-i; 211-i, 221-i die Berandung der Halteöffnung 5 passiert haben und sich aufgrund der Vorspannung voneinander wegbewegen W1, W2 und die Halteöffnung 5 beidseitig hintergreifen.

### Bezugszeichenliste

- 1: Stromsammelschienenmodul
- 2: Stromsammelschiene
- 3: Berührungsschutzschiene
- 5: Halteöffnung
- 6: dreireihiges Bauteil des Stromsammelschienenmoduls
- 7: einreihige Erweiterungsbauteile
- 13: Ausgestaltungsformen von Kontaktanschlüssen
- 100: Vorrichtung
- 100': Vorrichtung
- 107: Vorspannungselement
- 108: Einführöffnung
- 110: erste Rasteinrichtung
- 111-i: Rastzähne der ersten Rasteinrichtung
- 112-i: Rastelemente der ersten Rasteinrichtung
- 115: Wellenabschnitt der ersten Rasteinrichtung
- 116: Lagerabschnitt der ersten Rasteinrichtung
- 117: Federaufnahme der ersten Rasteinrichtung
- 118: Stempelabschnitte
- 121-i: Rastzähne der zweiten Rasteinrichtung
- 122-i: Rastelemente der zweiten Rasteinrichtung
- 125: Wellenabschnitt der zweiten Rasteinrichtung
- 126: Lagerabschnitt der zweiten Rasteinrichtung
- 127: Federaufnahme der zweiten Rasteinrichtung
- 130: erstes Schlittenelement
- 131: erster Schrägabschnitt
- 134: Schlitz
- 136: zweites Betätigungselement
- 140: zweites Schlittenelement
- 141: zweiter Schrägabschnitt
- 142-i: Führungsnuten
- 144: Absatz
- 148: Stempelabschnitte
- 151: erste mechanische Umsetzeinrichtung
- 152: zweite mechanische Umsetzeinrichtung
- 170: Gehäuse
- 171: Unterschale des Gehäuses
- 172: Mittelstück des Gehäuses
- 173: Oberschale des Gehäuses
- 174-i: Schutzwände
- 175-i: Führungsgrate
- 176: Lagerabschnitte
- 177: Öffnung
- 178-i: Schlitz
- 179: Aussparung
- 180: Funktionsanschluss
- 181-i: Anschlusskontakt
- 190: Funktionsmodul
- 191: Rahmenklemme
- 192: Schraube
- 193: Drahtschutzbügel
- 200: Vorrichtung
- 210: erste Rasteinrichtung
- 211-i: Rastzähne der ersten Rasteinrichtung
- 212-i: Rastelemente der ersten Rasteinrichtung
- 217: Federaufnahme
- 218: dritter Schrägabschnitt
- 121-i: Rastzähne der zweiten Rasteinrichtung
- 222-i: Rastelemente der ersten Rasteinrichtung
- 227: Federaufnahme
- 228: dritter Schrägabschnitt
- 230: erstes Schlittenelement
- 231: erster Schrägabschnitt
- 240: zweites Schlittenelement
- 241: zweiter Schrägabschnitt
- 248: vierter Schrägabschnitt
- 251: erste mechanische Umsetzeinrichtung
- 252: zweite mechanische Umsetzeinrichtung
- 270: Gehäuse
- 271: Unterschale
- 272: Schräge
- 273: Oberschale
- 291: Schraube
- 295: Schraubloch
- 300: Vorrichtung
- 380-i: Funktionsanschlüsse
- 390: Funktionsmodul
- 392-i: Federzugklemme
- 393-i: Betätigungselement
- 400: Vorrichtung
- 480: Funktionsanschluss
- 490: Schellenklemme
- 500: Vorrichtung
- 580: Funktionsanschluss
- 581: Anschlusskontakte
- 582: Basisplatte
- 590: Stehbolzen
- 1000: System
- A1: erste Bewegungsachse
- A2: zweite Bewegungsachse
- S10..S300: Verfahrensschritte

## Patentansprüche

1. Vorrichtung (100; 200; 300; 400; 500) zur Ver- und Entrastung eines elektrischen Funktionsmoduls (190; 390; 490; 590) an mindestens einer Halteöffnung (5) eines Stromsammelschienenmoduls (1), aufweisend:
eine erste Rasteinrichtung (110; 210) und eine zweite Rasteinrichtung (120; 220), wobei jede Rasteinrichtung (110, 120) mindestens einen Rastzahn (111-i, 121-i; 211-i, 221-i) aufweist, der zum Verrasten des elektrischen Funktionsmoduls (190) in die mindestens eine Halteöffnung (5) einführbar ist;
wobei der mindestens eine Rastzahn (111-i; 211-i) der ersten Rasteinrichtung (110; 210) und der mindestens eine Rastzahn (121-i; 221-i) der zweiten Rasteinrichtung (120; 220) voneinander abgewandt sind und zum Verrasten des elektrischen Funktionsmoduls (190) zum Hintergreifen der mindestens einen Halteöffnung (5) voneinander wegbewegbar (W1; W2) und zum Entrasten des elektrischen Funktionsmoduls (190) aufeinander zu bewegbar (Z1; Z2) sind;
ein erstes Schlittenelement (130; 230), welches entlang einer ersten Bewegungsachse (A1) linear bewegbar ist;
ein zweites Schlittenelement (140; 240), welches entlang einer zweiten Bewegungsachse (A2) linear bewegbar ist, welche senkrecht zu der ersten Bewegungsachse (A1) angeordnet ist;
eine erste mechanische Umsetzeinrichtung (151; 251), welche dazu eingerichtet ist, eine lineare Bewegung des ersten Schlittenelements entlang der ersten Bewegungsachse (A1) in eine lineare Bewegung des zweiten Schlittenelements entlang der zweiten Bewegungsachse (A2) umzusetzen; und
eine zweite mechanische Umsetzeinrichtung (152; 252), welche dazu eingerichtet ist, die lineare Bewegung des zweiten Schlittenelements (140; 240) entlang der zweiten Bewegungsachse (A2) in eine Bewegung der Rastzähne (111-i, 121-i; 211-i, 221-i), welche zu verschiedenen Rasteinrichtungen (110, 120; 210; 220) gehören, aufeinander zu (Z1; Z2) oder voneinander weg (W1; W2) umzusetzen.

2. Vorrichtung (100; 200; 300; 400; 500) nach Anspruch 1, wobei die erste mechanische Umsetzeinrichtung (151; 251) einen ersten Schrägabschnitt (131; 231) an dem ersten Schlittenelement (130; 230) mit einer ersten vordefinierten Neigung gegenüber der ersten Bewegungsachse (A1), sowie einen zweiten Schrägabschnitt (141; 241) an dem zweiten Schlittenelement (140; 240) mit der ersten vordefinierten Neigung gegenüber der ersten Bewegungsachse (A1) beinhaltet, wobei der zweite Schrägabschnitt (141; 241) an dem ersten Schrägabschnitt (131; 231) derart anliegt, dass eine lineare Bewegung des ersten Schlittenelements (130; 230) entlang der ersten Bewegungsachse (A1) eine lineare Bewegung des zweiten Schlittenelements (140; 240) entlang der zweiten Bewegungsachse (A2) bewirkt.

3. Vorrichtung (100) nach Anspruch 1 oder 2,
wobei die Rasteinrichtungen (110, 120) und die zweite mechanische Umsetzeinrichtung (152) derart ausgebildet sind, dass die Rastzähne (111-i, 121-i) auf einer gekrümmten Bahn aufeinander zu (Z1) beziehungsweise voneinander weg (W1) bewegt werden.

4. Vorrichtung (100) nach Anspruch 3,
wobei die Rasteinrichtungen (110, 120) jeweils einzeln um eine gemeinsame Rotationsachse (R) rotierbar angeordnet sind, und die zweite mechanische Umsetzeinrichtung (152) dazu eingerichtet ist, die lineare Bewegung des zweiten Schlittenelements (140) in jeweilige Drehbewegungen der Rasteinrichtungen (110, 120) aufeinander zu (Z1) beziehungsweise voneinander weg (W1) umzusetzen.

5. Vorrichtung (100) nach einem der Ansprüche 2 bis 4,
wobei die zweite mechanische Umsetzeinrichtung (152) mindestens einen Stempelabschnitt (148) an dem zweiten Schlittenelement (140) sowie mindestens einen Schulterabschnitt (118, 128) an mindestens einer Rasteinrichtung (110, 120) beinhaltet, wobei jeder Stempelabschnitt (148) so angeordnet und ausgebildet ist, dass er, bei einer Bewegung des zweiten Schlittenelements (140) entlang der zweiten Bewegungsachse (A2) in einer von dem ersten Schlittenelement (130) abgewandten Richtung an einem jeweiligen Schulterabschnitt (118, 128) ein Drehmoment auf diejenige Rasteinrichtung (110, 120) ausübt, welche den Schulterabschnitt (118, 128) beinhaltet.

6. Vorrichtung (200; 300; 400; 500) nach Anspruch 1 oder 2, wobei die Rasteinrichtungen (210, 220) und die zweite mechanische Umsetzeinrichtung (252) derart ausgebildet sind, dass die Rastzähne (211-i, 221-i) in einer linearen Bewegung aufeinander zu (Z2) sowie voneinander weg (W2) bewegbar sind.

7. Vorrichtung (200; 300; 400; 500) nach Anspruch 6,
wobei die zweite mechanische Umsetzeinrichtung (252) mindestens einen dritten Schrägabschnitt (248) an dem zweiten Schlittenelement (240) mit einer zweiten vordefinierten Neigung gegenüber der zweiten Bewegungsachse (A2) sowie mindestens einen vierten Schrägabschnitt (218, 228) an mindestens einer Rasteinrichtung (210, 220) mit der zweiten vordefinierten Neigung gegenüber der zweiten Bewegungsachse (A2) beinhaltet, wobei jeder dritte Schrägabschnitt (248) an einem jeweiligen vierten Schrägabschnitt (218, 228) derart anliegt, dass eine lineare Bewegung des zweiten Schlittenelements (240) entlang der zweiten Bewegungsachse (A2) in einer von dem ersten Schlittenelement (230) abgewandten Richtung in eine Bewegung der Rasteinrichtung (210, 220), welche den jeweiligen vierten Schrägabschnitt (218, 228) aufweist, entlang der ersten Bewegungsachse (A1) umgesetzt wird.

8. Vorrichtung (100; 200; 300; 400; 500) nach einem der Ansprüche 1 bis 6,
zusätzlich umfassend ein Vorspannungselement (107), insbesondere ein Federelement, welches dazu angeordnet und eingerichtet ist, auf die Rasteinrichtungen (110, 120; 210, 220) eine wechselseitige Vorspannung auszuüben, welche die Bewegung der Rastzähne (111-i, 121-i; 211-i, 221-i) voneinander weg (W1; W2) begünstigt.

9. Vorrichtung (100; 200; 300; 400; 500) nach Anspruch 8,
wobei jede Rasteinrichtung (110, 120; 210, 220) eine Federaufnahme (117, 127; 217, 227) aufweist, und wobei die Federaufnahmen (117, 127; 217, 227) dazu ausgebildet sind, das als Federelement ausgebildete Vorspannungselement (170) zumindest teilweise aufzunehmen und zu fixieren.

10. Vorrichtung (100; 200; 300; 400; 500) nach einem der Ansprüche 1 bis 9,
wobei einerseits des ersten und zweiten Schlittenelements (130, 140; 230, 240) ein Funktionsanschluss (180) für die elektrische Kontaktierung und/oder mechanische Arretierung des Funktionsmoduls (190) und andererseits des ersten und zweiten Schlittenelements (130, 140; 230, 240) mindestens ein Anschlusskontakt (181-i) ausgebildet ist, welcher dazu ausgebildet und angeordnet ist, in elektrischem Kontakt mit einer Stromsammelschiene (2) des Stromsammelschienenmoduls (1) zu stehen, wenn die Vorrichtung (100; 200; 300; 400; 500) an dem Stromsammelschienenmodul (1) verrastet ist.

11. Vorrichtung (100; 200; 300; 400; 500) nach Anspruch 10,
wobei der mindestens eine Anschlusskontakt (181-i; 581; 13a-13g) im Wesentlichen flach ausgebildet und parallel zu den Rastzähnen (111-i, 121-i; 211-i, 221-i) angeordnet ist.

12. Vorrichtung (100; 200; 300; 400; 500) nach Anspruch 11,
wobei der mindestens eine Anschlusskontakt (181-i; 581; 13a-13g) und die Rastzähne (111-i, 121-i; 211-i, 221-i) derart angeordnet und ausgebildet sind, dass sie gleichzeitig in verschiedene Halteschlitze einer Reihe von parallel angeordneten stromführenden Halteschlitzen als Halteöffnungen (5) des Stromsammelschienenmoduls (1) einführbar sind.

13. Vorrichtung (100; 200; 300; 400; 500) nach Anspruch 12, umfassend ein an dem Funktionsanschluss (180) elektrisch verbundenes und mechanisch arretiertes Funktionsmodul (190; 390; 490; 590).

14. Vorrichtung (100; 200; 300; 400; 500) nach Anspruch 13, wobei das Funktionsmodul (190)
als ein Stromeinspeisemodul mit:
- einer Rahmenklemme (191);
- einer Prismen- und Schellenklemme (490);
- einer Federzugklemme (390) mit einem Klemmbolzen (392-i) oder mit mehreren Klemmbolzen (392-i); und/oder
- einem Stehbolzen (590) ausgebildet ist
und/oder
als eine elektrische Komponente, insbesondere als ein Sicherungshalter, als ein Schalter, als ein Last-Trennschalter, als ein Last-Trennschalter mit Sicherungen, oder als ein Sicherungslasttrennschalter ausgebildet ist,
und /oder
als eine elektronische Komponente, insbesondere als ein Netzteil, als ein Überspannungsschutzgerät, oder als ein Motorstarter ausgebildet ist.

15. System (1000), umfassend ein Sammelschienenmodul (1) sowie eine Vorrichtung (100; 200; 300; 400; 500) nach einem der Ansprüche 1-14.

16. Verfahren zum Entrasten eines elektrischen Funktionsmoduls (190; 390; 490; 590) von mindestens einer Halteöffnung (5) eines Stromsammelschienenmoduls (1), aufweisend:
Bewegen (S100) eines ersten Schlittenelements (130; 230) einer Vorrichtung (100; 200; 300; 400; 500), welche durch das beidseitige Hintergreifen einer Halteöffnung (5) eines Stromsammelschienenmoduls (1) durch mindestens zwei voneinander abgewandte Rastzähne (111-i, 121-i; 211-i, 221-i) an dem Stromsammelschienenmodul (1) verrastet ist und welche einen Funktionsanschluss (180; 380-i; 480; 580) aufweist, an welchem das elektrische Funktionsmodul (190; 390; 490; 590) befestigt ist, in einer linearen Bewegung entlang einer ersten Bewegungsachse (A1), welche senkrecht zu einem longitudinalen Verlauf des Stromsammelschienenmoduls (1) angeordnet ist;
Bewegen (S200), als mechanisch-automatische Reaktion auf das Bewegen (S100) des ersten Schlittenelements (130; 230), eines zweiten Schlittenelements (140; 240) entlang einer zweiten Bewegungsachse (A2), welche senkrecht auf der ersten Bewegungsachse (A1) steht; und
Bewegen (S300), als mechanisch-automatische Reaktion auf das Bewegen (S300) des zweiten Schlittenelements (140; 240), von voneinander abgewandten Rastzähne (111-i, 121-i; 211-i, 221-i) aufeinander zu (Z1; Z2) bewegen, sodass die Rastzähne (111-i, 121-i; 211-i, 221-i) die Halteöffnung (5) nicht mehr beidseitig hintergreifen, wodurch die Vorrichtung (100; 200; 300; 400; 500) von dem Stromsammelschienenmodul (1) entrastet ist.
